# EUROPÄISCHE PATENTANMELDUNG

(11) **EP 4 627 980 A2**
(43) Veröffentlichungstag der Anmeldung: **08.10.2025**
(21) Anmeldenummer: 25197862.3
(22) Anmeldetag: 02.11.2022
(51) Int. Cl.: A47J 36/32

(54) **KÜCHENMASCHINE UND VERFAHREN**

(62) Teilanmeldung aus: 22205063.5
(71) Anmelder: Vorwerk & Co. Interholding GmbH, 42270 Wuppertal (DE)
(72) Erfinder: SCHMITZ, Dr., Kevin, 42781 Haan-Gruiten (DE); JANSEN, Dr., Sebastian, 44803 Bochum (DE); HAUNSCHILD, Felix, 45239 Essen (DE)
(74) Vertreter: Gille Hrabal Partnerschaftsgesellschaft mbB Patentanwälte

(57) **Zusammenfassung**

Die vorliegende Erfindung betrifft eine Küchenmaschine zum Durchführen eines Speisenzubereitungsvorgangs durch Erhitzen, Zerkleinern und/oder Rühren einer Speise in einem Speisenzubereitungsgefäß mithilfe eines Heizelements zum Erhitzen und/oder einem drehbaren Werkzeug zum Zerkleinern und/oder Rühren der Speise in dem Speisenzubereitungsgefäß, wobei die Küchenmaschine mindestens eine Funktionseinheit einschließlich einem Motor zum Drehen des Werkzeugs und/oder dem Heizelement zum Erhitzen umfasst, wobei die Küchenmaschine mindestens eine Einrichtung zur Beschränkung eines Freiheitsgrades eines Benutzers während der Benutzung der Küchenmaschine für eine Speisenzubereitung einschließlich mindestens eine motorbetriebene Verriegelungseinrichtung für das Speisenzubereitungsgefäß oder dessen Deckel umfasst. Eine Steuerung der Küchenmaschine ist so konfiguriert, dass die Steuerung auf Basis von einer Vielzahl von Parametern, die den Speisenzubereitungsvorgang beschreiben oder Einfluss darauf haben können, die mindestens eine Funktionseinheit und die mindestens eine Einrichtung zur Beschränkung des Freiheitsgrades so steuert, dass eine Reduzierung oder Erhöhung des Freiheitsgrades des Benutzers während der Benutzung der Küchenmaschine in Abhängigkeit von der Vielzahl der Parameter erfolgen kann. Die Erfindung betrifft ferner ein entsprechendes Verfahren und Computerprogramm. Der Freiheitsgrad des Benutzers kann hierdurch während der Zubereitung einer Speise mit einer Küchenmaschine verbessert erhöht werden.

## Beschreibung

Die vorliegende Erfindung betrifft eine Küchenmaschine zum Durchführen eines Speisenzubereitungsvorgangs durch Erhitzen, Zerkleinern und/oder Rühren einer Speise in einem Speisenzubereitungsgefäß mithilfe eines Heizelements zum Erhitzen und einem drehbaren Werkzeug zum Zerkleinern und/oder Rühren der Speise in dem Speisenzubereitungsgefäß, wobei die Küchenmaschine mindestens eine Funktionseinheit einschließlich einem Motor zum Drehen des Werkzeugs und/oder dem Heizelement zum Erhitzen umfasst, wobei die Küchenmaschine mindestens eine Einrichtung zur Beschränkung eines Freiheitsgrades eines Benutzers während der Benutzung der Küchenmaschine für eine Speisenzubereitung einschließlich mindestens eine motorbetriebene Verriegelungseinrichtung für das Speisenzubereitungsgefäß oder dessen Deckel umfasst.

Eine Küchenmaschine unterstützt den Benutzer beim Zubereiten einer Speise mit hilfreichen Funktionen. Allerdings gehen unterstützende Funktionen einer Küchenmaschine üblicherweise einher mit Beschränkungen des Freiheitsgrades für den Benutzer bei der Speisenzubereitung.

Es ist Aufgabe der Erfindung, eine verbesserte Küchenmaschine nebst Verfahren und Computerprogramm bereitzustellen.

Zur Lösung der Aufgabe dienen eine Küchenmaschine gemäß Anspruch 1 sowie ein Verfahren und Computerprogramm gemäß den Nebenansprüchen. Bevorzugte Ausführungsformen sind in den abhängigen Ansprüchen beschrieben.

Das Problem wird gelöst durch eine Küchenmaschine zum Durchführen eines Speisenzubereitungsvorgangs durch Erhitzen, Zerkleinern und/oder Rühren einer Speise in einem Speisenzubereitungsgefäß mithilfe eines Heizelements zum Erhitzen und/oder einem drehbaren Werkzeug zum Zerkleinern und/oder Rühren der Speise in dem Speisenzubereitungsgefäß, wobei die Küchenmaschine mindestens eine Funktionseinheit einschließlich einem Motor zum Drehen des Werkzeugs und/oder dem Heizelement zum Erhitzen umfasst, wobei die Küchenmaschine mindestens eine Einrichtung zur Beschränkung eines Freiheitsgrades eines Benutzers während der Benutzung der Küchenmaschine für eine Speisenzubereitung einschließlich mindestens eine motorbetriebene Verriegelungseinrichtung für das Speisenzubereitungsgefäß oder dessen Deckel umfasst. Eine Steuerung der Küchenmaschine ist so konfiguriert, dass die Steuerung auf Basis von einer Vielzahl von Parametern, die den Speisenzubereitungsvorgang beschreiben oder Einfluss darauf haben können, die mindestens eine Funktionseinheit und die mindestens eine Einrichtung zur Beschränkung des Freiheitsgrades so steuert, dass eine Reduzierung oder Erhöhung des Freiheitsgrades des Benutzers während der Benutzung der Küchenmaschine in Abhängigkeit von der Vielzahl der Parameter erfolgen kann.

Der Freiheitsgrad kann auf diese Weise erhöht oder sogar maximiert und gleichzeitig der gewohnte Kochkomfort beim Kochen mit einer Küchenmaschine für den Benutzer aufrechterhalten werden.

Der Erfindung liegt die Erkenntnis zugrunde, dass trotz einer Erhöhung des Freiheitsgrades für den Benutzer der gewohnte Kochkomfort beim Kochen mit einer Küchenmaschine dennoch erhalten werden kann, wenn eine Erhöhung und eine Reduzierung des Freiheitsgrades des Benutzers während der Benutzung der Küchenmaschine auf Basis von einer Vielzahl von Parametern erfolgt. Eine Erhöhung oder sogar Maximierung des Freiheitsgrades insgesamt können hierdurch bewirkt, die technische Handhabbarkeit der Küchenmaschine somit verbessert und Speisen mit höherer Qualität erzielt werden. Als positiver Nebeneffekt wird ein möglichst freies Kochen mit der Küchenmaschine mit insgesamt weniger Einschränkungen ermöglicht.

Speziell im Bereich der Küchenmaschinen, die zunehmend den Benutzer anleiten und führen, um ein möglichst benutzerunabhängiges, reproduzierbares Kochergebnisses zu gewährleisten, wurde der Freiheitsgrad für den Benutzer bisher üblicherweise gezielt auf einen festen, vordefinierten und dadurch in der Regel niedrigeren Freiheitsgrad vorgesehen, der den gewohnten Kochkomfort sicherstellte und der lediglich in diesen engen Grenzen größere Vielfalt von Zubereitungen zuließ. Diese Grenzen wurden bei einigen Küchenmaschinen punktuell, jedoch starr mit einer entsprechenden Schaltelektronik, aufgeweitet. Der gewohnte Kochkomfort einer Küchenmaschine beinhaltet die Übernahme von Teilkochfunktionen durch die Küchenmaschine wie z.B. Rühren, Zerkleinern und/oder Aufheizen, optional Kochanleitungsmaßnahmen sowie notwendige Überwachungs- und Sicherheitseinrichtungen, so dass der Benutzer vergleichsweise einfach und zuverlässig eine Speise zubereiten kann.

Durch die vorliegende Erfindung kann beispielsweise erreicht werden, dass während des Speisenzubereitungsvorgang mit der Küchenmaschine der Freiheitsgrad für den Benutzer automatisch erhöht wird, wenn eine Prüfung der Vielzahl der Parameter (des Ist-Zustands) dies für tolerierbar bewertet. Dies kann dazu führen, dass sich während des Speisenzubereitungsvorgangs der Deckel und/oder das Speisenzubereitungsgefäß ohne Vorankündigung entriegeln. Wenn der Benutzer den Deckel oder das Speisenzubereitungsgefäß während des Speisenzubereitungsvorgangs abheben möchte, ist dies dann für gewisse Zeitabschnitte möglich (weil in Entriegelt-Stellung) und in anderen Zeitabschnitten des Speisenzubereitungsvorgangs nicht möglich (weil in Verriegelt-Stellung).

Durch die vorliegende Erfindung kann beispielsweise erreicht werden, dass während des Speisenzubereitungsvorgang mit der Küchenmaschine der Benutzer den Deckel abzuheben versucht oder über eine Benutzerschnittstelle einen Soll-Wert für eine der mindestens einen Funktionseinheit (wie z.B. die Drehzahl des Werkzeugs oder die Temperatur) versucht zu verändern. Während bei herkömmlichen Küchenmaschinen starre Grenzen für solche angeforderten Änderungen des Benutzers gibt, wird durch die vorliegende Erfindung insbesondere eine Prüfung der angeforderten Änderung des Benutzers anhand der aktuellen Situation (auf Basis der Vielzahl der Parameter) durchgeführt, ob diese angeforderte Änderung erlaubt werden kann oder nicht. Wenn die angeforderte Änderung unter Berücksichtigung der Vielzahl von Parameter in der aktuellen Situation erlaubt werden kann, wird die angeforderte Änderung umgesetzt. Andernfalls wird die angeforderte Änderung entweder nicht umgesetzt oder modifiziert (also möglichst ähnlich oder nahe der angeforderten Änderung) umgesetzt. Bei einer angeforderten Drehzahl, die zu hoch ist, um erlaubt werden zu können, wird beispielsweise eine unter den gegebenen Umständen maximal erlaubbare Erhöhung der Drehzahl umgesetzt.

Durch die vorliegende Erfindung kann beispielsweise erreicht werden, dass bei der Speisenzubereitung in einem rezeptunterstützen Koch-Modus auf Basis eines digitalen Rezeptes mit Rezeptschritten bevorzugt benötigte, manuelle Aktionen des Benutzers im Verlauf des durch das Rezept geplanten Speisenzubereitungsvorgangs vorgezogen und der Benutzer aufgefordert wird, diese manuellen Aktionen bereits zu Anfang eines Rezeptes oder eines Rezeptschrittes durchzuführen. Hierdurch wird dem Benutzer zwar für einen längeren Zeitraum der Freiheitsgrad reduziert (weil der Benutzer beispielsweise den Deckel schon zu Anfang in die Schließposition bringen soll), aber dafür dem Benutzer die zusätzliche Freiheit gegeben, sich für längere Zeit von der Küchenmaschine zu entfernen, weil für längere Zeit keine manuellen Aktionen von dem Benutzer erforderlich sind. Gleichzeitig kann der Benutzer nach wie vor versuchen, den Gerätezustand oder Soll-Werte einer Funktionseinheit zu ändern, wobei eine solche angeforderte Änderung wie oben beschrieben dann geprüft und - falls erlaubbar - umgesetzt wird, so dass sich der Freiheitsgrad des Benutzers auch in dieser Ausgestaltung insgesamt erhöht.

Was erlaubt oder tolerierbar ist, wird insbesondere in hinterlegten Daten so definiert, dass ein gewohnter Kochkomfort stets sichergestellt werden kann.

Durch die vorliegende Erfindung kann beispielsweise erreicht werden, dass auch Zustände der Speise oder Zutaten in dem Speisenzubereitungsgefäß durch die Vielzahl der Parameter in die Prüfung einfließen, ob ein Ist-Zustand unter Aufrechterhaltung eines hohen Freiheitsgrades beispielsweise durch Aufrechterhaltung einer Entriegelt-Stellung einer der mindestens einen Verriegelungseinrichtung tolerierbar oder eine angeforderte Änderung erlaubt werden kann. Eine angeforderte Temperaturerhöhung kann beispielsweise bei hoch viskosen Zutaten erlaubbar sein, während die gleiche Temperaturerhöhung bei niedrig viskosen Zutaten im Speisenzubereitungsgefäß zu einem Anbrennen führen könnten und daher nicht erlaubbar sind. Eine angeforderte Temperaturerhöhung kann beispielsweise bei einem durch einen Rezeptschritt geplanten Kochprozess in Form eines Anbratprozesses erlaubbar, und bei einem durch einen Rezeptschritt geplanten Kochprozess in Form eines Dünstprozesses nicht erlaubbar sein. Durch eine Berücksichtigung von Parametern der Vielzahl der Parameter, die auch beispielsweise die Zutaten-Zustände und/oder durch einen Rezeptschritt geplanten Kochprozess wiederspiegeln, kann dem Benutzer durch diese detailliertere Prüfung der aktuellen Situation in vielen Fällen ein höherer Freiheitsgrad erlaubt werden, der bei herkömmlichen Küchenmaschinen nicht möglich wäre.

Der Freiheitsgrad eines Benutzers während der Benutzung der Küchenmaschine kann ein Maß für die Möglichkeiten der Einflussnahme des Benutzers auf die Küchenmaschine und/oder den Speisenzubereitungsvorgang sein. Besonders bevorzugt kann der Freiheitsgrad mit einer Anzahl der (von der Steuerung) erlaubten Veränderungen beschrieben werden. Insbesondere umfasst die Anzahl der erlaubten Veränderungen die Möglichkeit der Änderung einer Stellung (z.B. Verriegelt-Stellung oder Entriegelt-Stellung des Deckels mit dem Speisenzubereitungsgefäß und/oder des Speisenzubereitungsgefäßes mit der Aufnahme) der mindestens einen Einrichtung durch den Benutzer. Insbesondere umfasst die Anzahl der erlaubten Veränderungen die Möglichkeit der Änderung eines Gerätzustand, bevorzugt eine Änderung der Deckelposition (Schließposition oder nicht in Schließposition auf dem Speisenzubereitungsgefäß), eine Änderung des Typs des verwendeten Speisenzubereitungsgefäßes (durch ein Entfernen eines Speisenzubereitungsgefäßes eines ersten Typs und dem Einsetzen eines Speisenzubereitungsgefäßes eines unterschiedlichen, zweiten Typs) und/oder eine Änderung des Typs oder des Vorhandenseins des Werkzeugs oder eines Zubehörs (also ein Zubehörteil), vorzugsweise detektierbar mithilfe einer Zubehörerkennung. Insbesondere umfasst die Anzahl der erlaubten Veränderungen die Möglichkeit der Änderung eines Soll-Wertes der mindestens einen Funktionseinheit, insbesondere betreffend eine Drehrichtung des Werkzeugs und/oder einer Soll-Temperatur) durch den Benutzer. Beispielsweise stellt ein Wechsel der Verriegelung des Deckels von der Verriegelt-Stellung in die Entriegelt-Stellung eine Erhöhung des Freiheitsgrades für den Benutzer dar, weil der Benutzer hierdurch die Möglichkeit erhält, den Deckel bei Bedarf abzunehmen.

In einer Ausgestaltung wird der Freiheitsgrad erhöht bzw. die Anzahl der erlaubten Veränderungen steigt, indem die Steuerung dem Benutzer in Abhängigkeit von der Vielzahl von Parametern einen zusätzlichen Soll-Wertebereich, insbesondere für die Drehzahl des Werkzeugs, freigibt, so dass der Benutzer einen Soll-Wert innerhalb des zusätzlichen Soll-Wertebereichs anfordern kann und dieser von der Steuerung umgesetzt wird. Beispielsweise ist der Freiheitsgrad erhöht, wenn ein Benutzer bei geöffnetem Deckel, der sich nicht in der Schließposition befindet, bei entsprechend geringer Temperatur der Speise und/oder bei entsprechend geringem Füllstand die Drehzahl auf einen höheren Soll-Wert innerhalb eines in dieser Situation erlaubten, zusätzlichen Soll-Wertebereichs erhöht, anstatt lediglich eine starre, sehr niedrige Drehzahl oder gar keine Drehzahl größer Null des Werkzeugs bei geöffnetem Deckel zuzulassen.

Die Küchenmaschine kann verschiedene Funktionseinheiten umfassen, vorzugsweise den Motor zum Drehen des Werkzeugs und/oder das Heizelement zum Erhitzen.

Die Küchenmaschine umfasst mindestens zwei Einrichtung zur Beschränkung eines Freiheitsgrades eines Benutzers, darunter bevorzugt mindestens zwei Verriegelungseinrichtungen, vorzugsweise eine Verriegelungseinrichtung für das verriegelte Verbinden des Speisenzubereitungsgefäßes mit einer Aufnahme der Küchenmaschine und eine Verriegelungseinrichtung für ein verriegeltes Verbinden des Deckels mit dem Speisenzubereitungsgefäß. In einer Ausgestaltung zählt zu der mindestens einen Einrichtung zur Beschränkung eines Freiheitsgrades eines Benutzers eine Prüfungseinheit, die auf Basis von der Vielzahl der Parameter und anhand von hinterlegten Daten eine Erhöhung des Freiheitsgrades freigibt oder den Freiheitsgrad beschränkt. Die Prüfungseinheit wird weiter unten näher beschrieben.

In einer Ausführungsform ist vorgesehen, dass die Verriegelungseinrichtung für das Speisenzubereitungsgefäß eine Verriegelt-Stellung und eine Entriegelt-Stellung einnehmen kann. In einer Ausführungsform ist vorgesehen, dass die Verriegelungseinrichtung für den Deckel (des Speisenzubereitungsgefäßes) eine Verriegelt-Stellung und eine Entriegelt-Stellung einnehmen kann. In einer Ausführungsform ist die Verriegelungseinrichtung für ein gekoppeltes Verriegeln und Entriegeln des Speisenzubereitungsgefäßes auf oder in einer Aufnahme und dessen Deckel auf dem Speisenzubereitungsgefäß eingerichtet, so dass der Deckel und das Speisenzubereitungsgefäß entweder zeitgleich oder mit einem vordefinierten Zeitversatz die jeweilige Verriegelt-Stellung oder Entriegelt-Stellung einnehmen.

In einer alternativen oder ergänzenden Ausführungsform ist die Steuerung so eingerichtet, dass während des Speisenzubereitungsvorgangs sich die Verriegelungseinrichtung für den Deckel in der Entriegelt-Stellung befinden kann, obwohl eine Drehzahl des Werkzeugs in einem Drehzahl-Bereich zwischen einer Mindestdrehzahl größer Null und einer Höchstdrehzahl liegt.

In einer alternativen oder ergänzenden Ausführungsform ist die Steuerung so eingerichtet, dass während des Speisenzubereitungsvorgangs sich die Verriegelungseinrichtung für das Speisenzubereitungsgefäß und/oder dessen Deckel in der Entriegelt-Stellung befinden kann, obwohl eine Drehzahl des Werkzeugs in einem Drehzahl-Bereich zwischen einer Mindestdrehzahl größer Null und einer Höchstdrehzahl liegt.

In der Verriegelt-Stellung des Deckels kann der Deckel vom Benutzer nicht von dem Speisenzubereitungsgefäß entfernt werden. In der Verriegelt-Stellung des Deckels befindet sich der Deckel insbesondere in der Schließposition auf dem Speisenzubereitungsgefäß.

In der Verriegelt-Stellung des Speisenzubereitungsgefäßes kann das Speisenzubereitungsgefäß vom Benutzer nicht von der Aufnahme der Küchenmaschine entfernt werden. Insbesondere befindet sich die Aufnahme an einer Oberseite des Gehäuses der Küchenmaschine.

In einer Ausgestaltung umfasst die Verriegelungseinrichtung für ein gekoppeltes Verriegeln und Entriegeln des Speisenzubereitungsgefäßes auf oder in der Aufnahme und dessen Deckel auf dem Speisenzubereitungsgefäß mechanische Bauteile, insbesondere mindestens einen Hebel, Riegel und/oder Bowdenzug, die miteinander mechanisch wechselwirken und das Verriegeln und/oder Entriegeln des Deckels und des Speisenzubereitungsgefäßes miteinander mechanisch koppeln. Insbesondere umfasst die Verriegelungseinrichtung für ein gekoppeltes Verriegeln es ein erstes Verriegelungsmittel für den Deckel und ein zweites Verriegelungsmittel für das Speisenzubereitungsgefäß und/oder die Verriegelungseinrichtung ist so eingerichtet, dass eine einzige Betätigung ausreicht, um den Deckel und das Speisenzubereitungsgefäß jeweils zu verriegeln oder zu entriegeln.

In einer Ausführungsform ist die Küchenmaschine so eingerichtet, dass der Speisenzubereitungsvorgang im rezeptunterstützen Koch-Modus auf Basis eines digitalen Rezeptes mit Rezeptschritten für eine zumindest teilautomatisierte Speisenzubereitung mit der Küchenmaschine oder im manuellen Koch-Modus erfolgt.

Im manuellen Koch-Modus nimmt der Benutzer selbst über eine Benutzerschnittstelle durch einen angeforderten Soll-Wert Einfluss auf die mindestens eine Funktionseinheit wie z.B. Betätigen eines Knopfes zum Einstellen einer gewünschten Soll-Drehzahl des Werkzeugs oder Soll-Temperatur des Heizelements. Im manuellen Koch-Modus gibt es keinen Einfluss von einem digitalen Rezept auf den Speisenzubereitungsvorgang.

In einer Ausgestaltung ist eine Zubehörerkennung vorgesehen zum Erkennen bzw. Detektieren des Vorhandseins eines Werkzeugs oder Zubehörs, des Nicht-Vorhandseins eines Werkzeugs oder Zubehörs, des Werkzeug-Typs und/oder des Zubehör-Typs. Vorzugsweise ist die Zubehörerkennung so eingerichtet, dass das Detektieren bzw. Erkennen direkt über integrierte NFC TAGs, über ein magnetbasiertes System oder mithilfe eines elektrisch realisierten Systems (z.B. widerstandsbasiert, kapazitativ oder induktiv) erfolgt. Alternativ oder ergänzend ist die Zubehörerkennung bevorzugt so eingerichtet, dass das Detektieren bzw. Erkennen indirekt durch eine Bestätigung durch den Benutzer über die Benutzerschnittstelle und/oder indirekt mithilfe einer optischen Erfassung (z.B. via Kamera) erfolgt. In einer Ausgestaltung stellt das Aufstellen von einem Zubehör bzw. Zubehörteil auf den Deckel als ein Parameter, vorzugsweise zur Aktivierung der Verriegelung.

In einer Ausführungsform beinhalten die Vielzahl der Parameter mindestens einen Ist-Zustand, insbesondere einen Ist-Wert der mindestens einen Funktionseinheit, einen Ist-Zustand der Speise und/oder einen weiteren Ist-Zustand der Küchenmaschine umfasst.

In einer Ausgestaltung ist ein Sensor für die Erfassung eines Ist-Zustands (der oben erwähnten Ist-Zustände) und/oder eine Ermittlungseinheit (der Steuerung) zur Ermittlung des Ist-Zustands vorgesehen. Ein Ist-Zustand kann eine Ist-Zustandseigenschaften sein, wie z.B. ein Ist-Zutaten-Zustand. Vorzugsweise kann die Ermittlungseinheit einen Algorithmus zum Verarbeiten der von dem mindestens einen Sensor erfassten Messwerten umfassen, um den Ist-Zustand zu ermitteln.

Ein Parameter, der einen Ist-Zustand beinhaltet, beschreibt den Speisenzubereitungsvorgang.

Ein Parameter, der einen Ist-Zustand in Form eines Ist-Wertes der mindestens einen Funktionseinheit beinhaltet, ist bevorzugt eine Ist-Drehzahl, ein Ist-Drehmoment, eine Ist-Drehrichtung, ein Ist-Druck und/oder eine Ist-Heizleistung des Temperaturelements. Insbesondere kann die Steuerung die Ist-Drehzahl, das Ist-Drehmoment, die Ist-Drehrichtung, den Ist-Druck und/oder die Ist-Heizleistung des Temperaturelements ermitteln oder ausgeben.

Ein Parameter, der einen Ist-Zustand der Speise (in dem Speisenzubereitungsgefäß) beinhaltet, ist bevorzugt eine Ist-Temperatur der Speise, ein Ist-Füllstand der Speise im Speisenzubereitungsgefäß und/oder ein Ist-Zutaten-Zustand mindestens einer Zutat der Speise. Besonders bevorzugt beinhaltet ein Ist-Zutaten-Zustand eine Lebensmittelart (insbesondere eine von mehreren vordefinierten Lebensmittelarten), einen Flüssigkeitsanteil, ein Fettanteil, ein Öl-Anteil, eine Viskosität der Speise und/oder ein Anteil von stückigen Lebensmitteln (z.B. Gulasch). Bevorzugt ist vorgesehen, die aktuelle Viskosität der Speise durch eine Signalauswertung des Motorstroms zu ermitteln, durch den der Motor zum Drehen des Werkzeugs angetrieben wird. Alternativ oder ergänzend können ein Rezept oder Rezeptschritt eine Information über die Viskosität oder zur Ermittlung der Viskosität enthalten. Insbesondere ist ein Temperatursensor zum Messen oder Ermitteln (durch die Steuerung auf Basis des Messwertes des Temperatursensors) der Ist-Temperatur der Speise vorgesehen. Vorzugsweise ist ein Füllstandsensor zum Erfassen des Ist-Füllstands der Speise im Speisenzubereitungsgefäß vorgesehen oder die Steuerung ist so eingerichtet, dass die Steuerung den Ist-Füllstand anhand von Messwertes mindestens eines Sensor, z.B. der Gewichtssensoren (vorzugsweise in Kombination mit anderen Messwerten, Informationen oder Daten), ermittelt.

Ein sogenannter "weiterer Ist-Zustand der Küchenmaschine" beinhaltet insbesondere mindestens einen Ist-Zustand der mindestens einen Einrichtung bevorzugt in Form eines Stellzustands (z.B. der Verriegelungseinrichtung) und/oder mindestens einen Ist-Zustand eines Gerätezustands (bevorzugt des Ist-Zustands der Deckelposition), eines Ist-Speisenzubereitungsgefäß-Typs, Ist-Deckel-Typs, Ist-Werkzeug-Typs und/oder Ist-Zubehör-Typs.

Insbesondere umfassen die Stellzustände den Verriegelt-Zustand und den Entriegelt-Zustand. Insbesondere ist ein Stellzustand detektierbar durch einen (jeweiligen) Stellzustandssensor, z.B. einen Deckel-Stellzustandssensor und/oder Speisenzubereitungsgefäß-Stellzustandssensor. Insbesondere umfassen die Deckelpositionen die Schließposition und nicht in Schließposition. Insbesondere ist die Deckelpositionen detektierbar durch einen Schließpositionssensor. In einer Ausgestaltung kann der Schließpositionssensor detektieren oder ermitteln, wenn der Benutzer den aufgrund der Verriegelt-Stellung erfolglosen Versuch unternimmt, den verriegelten Deckel aus der Schließposition zu entfernen. Vorzugsweise ist eine Speisenzubereitungsposition ein Gerätezustand mit einem Ist-Zustand der Speisenzubereitungsgefäßposition, der bevorzugt durch einen Speisenzubereitungsgefäß-Positionssensor detektiert werden kann. Insbesondere umfassen Speisenzubereitungsgefäß-Typen einen ersten Speisenzubereitungsgefäß-Typ mit einem größeren Füllvolumen und/oder Druckkesselvorrichtungen im Vergleich zu einem zweiten Speisenzubereitungsgefäß-Typs mit einem kleineren Füllvolumen und/oder ohne Druckkesselvorrichtungen. Insbesondere ist ein Speisenzubereitungsgefäß-Typ-Sensor vorgesehen, um den Speisenzubereitungsgefäß-Typ zu erkennen. Druckkesselvorrichtungen ermöglichen die Nutzung eines Topfs als Schnellkochtopf mit einem Druck von über 1,1 bar. Insbesondere umfassen Deckel-Typen einen ersten Deckel-Typ z.B. mit einer Deckelöffnung und/oder einen zweiten Deckel-Typ, der dicht (luftdicht) das Speisenzubereitungsgefäß verschließen kann. Insbesondere ist ein Deckel-Typ-Sensor vorgesehen, um den Deckel-Typ zu erkennen. Insbesondere umfassen Werkzeug-Typen ein erstes Werkzeug mit Schneiden zum Zerkleinern, ein zweites Werkzeug mit stumpfen, länglichen, radialen Armen zum Rühren und/oder ein drittes Werkzeug zum Abschaben des Bodens des Speisenzubereitungsgefäßes. Insbesondere ist ein Werkzeug-Typen-Sensor zum Detektieren des Werkzeug-Typs vorgesehen. Insbesondere umfassen Zubehör-Typen einen Rühraufsatz auf dem Werkzeug insbesondere mit einer schmetterlingartigen Form umfassend Flügel mit Öffnungen, einen Messbecher zum Aufsetzung zum Aufsetzen auf den Deckel oder (über oder) in eine Deckelöffnung, einen Garkorb-Einsatz zum Einsetzen in das Speisenzubereitungsgefäß bevorzugt mit einer zylinderförmigen Wandung mit Öffnungen, einen Behälteraufsatz zum Aufsetzen auf den Deckel insbesondere mit Öffnungen an der Unterseite zum Einlassen von Wasserdampf aus dem Speisezubereitungsgefäß in den Behälteraufsatz, eine Schälscheibe mit einer abrasiven Oberfläche und einer mittigen Kupplungsschnittstelle zum drehgekoppelten Aufsetzen auf das Werkzeug zum Schälen von Gemüse einschließlich z.B. Kartoffeln, und/oder einen Schneidaufsatz zum Aufsetzen auf das Speisenzubereitungsgefäß oder den Deckel umfassend Schneidmittel zum Schneiden von zuzuführenden Zutaten einschließlich Gemüse, wobei das Schneidmittel durch einen Kopplungsmechanismus mit dem Werkzeug drehgekoppelt ist. Insbesondere ist ein Zubehör-Typ-Sensor zum Erkennen eines bestimmten Zubehör-Typs vorgesehen oder es ist ein Zubehör-Typ-Sensor für jedes der Zubehör-Typen zum jeweiligen Detektieren vorgesehen.

In einer Ausführungsform umfasst die Vielzahl der Parameter mindestens einen aktuellen Soll-Wert, einen angeforderten Soll-Wert und/oder einen geplanten Soll-Zustand, insbesondere bezüglich der mindestens einen Funktionseinheit. Bevorzugt betrifft der aktuelle Soll-Wert, der angeforderte Soll-Wert und/oder der geplante Soll-Zustand eine Soll-Drehzahl (des Werkzeugs bzw. des Motors zum Drehen des Werkzeugs), das Soll-Drehmoment (des Werkzeugs bzw. des Motors), die Soll-Drehrichtung (des Werkzeugs bzw. des Motors), den Soll-Druck und/oder Soll-Temperatur (des Heizelements), einen Soll-Zutaten-Zustand der Speise, und/oder einer Soll-Zubereitungsart.

"Angefordert" beinhaltet insbesondere vom Benutzer oder einem digitalen Rezept angefordert, z.B. ein angeforderter Soll-Wert.

"Geplant" beinhaltet insbesondere ein geplanter Soll-Zustand gemäß einem digitalen Rezept. Insbesondere ist ein geplanter Soll-Zustand abhängig von einem geplanten Kochprozess wie z.B. Anbraten, Dünsten, Dampfen oder Kochen.

"Aktueller Soll-Wert" meint den Soll-Wert, mit dem aktuell gesteuert wird (z.B. eine der mindestens einen Funktionseinheit).

In einer Ausführungsform umfasst die Vielzahl der Parameter mindestens einen angeforderten Stellzustand einer der mindestens einen Einrichtung oder einen (insbesondere aktuellen oder geplanten) Stellzustand der mindestens einen Einrichtung, insbesondere bezüglich der Verriegelt-Stellung und Entriegelt-Stellung der mindestens einen Verriegelungseinrichtung. Insbesondere kann der (aktuelle) Stellzustand einer der mindestens einen Einrichtung durch den oben erwähnten Stellzustandssensor detektiert werden.

In einer Ausführungsform umfasst die Vielzahl der Parameter mindestens einen Gerätezustand oder eine angeforderte Gerätezustandsänderung. Insbesondere beinhaltet einer der Vielzahl der Parameter, ob sich der Deckel in der Schließposition befindet oder nicht. Vorzugsweise umfasst die Vielzahl der Parameter eine angeforderte Änderung in Form eines angeforderten Entriegelns und Entfernens des Deckels aus der Schließposition, insbesondere auf Basis einer Detektion des oben beschriebenen Schließpositionssensors. Insbesondere enthält einer der Vielzahl der Parameter eine Information über den Speisenzubereitungsgefäß-Typ, den Deckel-Typ, den Werkzeug-Typ und/oder den Zubehör-Typ und/oder einem Vorhandensein oder Nichtvorhandensein des Werkzeugs oder eines Zubehörs. Die Information ist bevorzugt ein geplanter Zustand gemäß eines Rezeptschrittes.

In einer Ausführungsform ist die Steuerung so eingerichtet, dass die Steuerung eine angeforderte Änderung mithilfe von hinterlegten Daten prüft, ob die angeforderte Änderung erlaubt ist oder nicht. Die Prüfung erfolgt durch die eingangs erwähnte Prüfungseinheit, die auf Basis von der Vielzahl der Parameter und anhand der hinterlegten Daten eine Erhöhung des Freiheitsgrades freigibt oder den Freiheitsgrad beschränkt. Die angeforderte Änderung beinhaltet insbesondere einen angeforderten Soll-Wert für eine der mindestens einen Funktionseinheit, ein angeforderter Soll-Zustand, ein angeforderter Stellzustand einer der mindestens einen Einrichtung und/oder eine angeforderte Gerätezustandsänderung. Ein Parameter, der eine angeforderte Änderung beinhaltet, kann Einfluss auf den Speisenzubereitungsvorgang haben. Die angeforderte Änderung kann also das Anfordern eines neuen Wertes (z.B. Soll-Wert), der sich von dem aktuellen Wert (z.B. Ist-Wert) unterscheidet, betreffen. "Erlaubt" bedeutet, dass ein in den hinterlegten Daten vordefiniertes Kriterium erfüllt wird, so dass die angeforderte Änderung von der Steuerung durch Steuern z.B. der entsprechenden Funktionseinheit umgesetzt wird. Z.B. wird beim Erfüllen des Kriteriums eine vom Benutzer angeforderter Drehzahl-Wert umgesetzt, indem der Motor des Werkzeugs von der Steuerung durch einen entsprechenden Soll-Wert zur Umsetzung der angeforderten Drehzahl angesteuert wird, so dass sich das Werkzeug mit einer neuen Geschwindigkeit gemäß des angeforderten Dreh-Wertes dreht. Wenn das vordefinierte Kriterium nicht erfüllt ist, wird die Funktionseinheit nicht wie angefordert angesteuert und die Drehzahl bleibt unverändert (Null oder größer Null). Ein weiteres Beispiel besteht in dem Versuch des Benutzers, den verriegelten Deckel während des Betriebs aus der Schließposition zu entfernen und hierdurch die entsprechende Änderung anfordert. Wenn die Prüfung durch die Prüfungseinheit ergibt, dass diese Änderung erlaubt ist, wird die Steuerung die Verriegelungseinrichtung zum Wechsel von der Verriegelt-Stellung in die Entriegelt-Stellung des Deckels veranlassen.

In einer Ausführungsform ist die Steuerung so eingerichtet, dass die Steuerung einen Ist-Zustand, der in der Vielzahl von Parametern enthalten ist, mithilfe von hinterlegten Daten prüft, ob der Ist-Zustand toleriert werden kann oder nicht. Die Prüfung erfolgt durch die Prüfungseinheit der Steuerung, die auf Basis von der Vielzahl der Parameter und anhand von hinterlegten Daten eine Erhöhung des Freiheitsgrades freigibt oder den Freiheitsgrad beschränkt. "Toleriert" bedeutet, dass ein in den hinterlegten Daten vordefiniertes Kriterium erfüllt wird, so dass die Steuerung keine Maßnahme veranlasst. Wenn ein Ist-Zustand nicht toleriert wird, weil ein in den hinterlegten Daten vordefiniertes Kriterium nicht erfüllt wird, initiiert die Steuerung eine Maßnahme. Eine solche Maßnahmen kann beispielsweise das Ändern eines Soll-Wertes einer Funktionskomponente und/oder das Ausgeben eines Hinweises an den Benutzer sein. Wenn z.B. der Benutzer den Deckel aus der Schließposition zu entfernen versucht oder der Füllstand gemäß dem vorliegenden Ist-Zustand gestiegen ist, so dass hierdurch ein in den hinterlegten Daten vordefiniertes Kriterium nicht mehr erfüllt wird, kann dies in einer Ausgestaltung die Steuerung dazu veranlassen, den Soll-Wert der Drehzahl und/oder den Soll-Wert des Drehmoments des Werkzeugs zu reduzieren. Insbesondere ist eine Maßnahme der Steuerung so vordefiniert in den hinterlegten Daten, dass das vordefinierte Kriterium erfüllt wird. Dem Benutzer wird hierdurch in dem vom Benutzer gewünschten Punkt eine zusätzliche Freiheit eingeräumt und an anderer Stelle eine Beschränkung vorgenommen.

Eine Prüfung einer angeforderten Änderung erfolgt vorzugsweise unverzüglich. Eine Prüfung des mindestens einen Ist-Zustands erfolgt vorzugsweise kontinuierlich (insbesondere mit einer Taktzeit der Steuerung von weniger als einer Sekunde) oder in regelmäßigen Zeitintervallen. In der Ausgestaltung mit regelmäßigen Zeitintervallen beträgt die Intervallzeit höchstens 30 Sekunden (um Rechenkapazität zu sparen), vorzugsweise höchstens 2 Sekunden (um einen erhöhten Kochkomfort zu erzielen). Wenn eine angeforderte Änderung vorliegt, wird die entsprechende Prüfung zusätzlich und/oder zeitlich separat zu den Prüfungen des Ist-Zustands durchgeführt.

Insbesondere sind die hinterlegten Daten, vordefinierten Kriterien und/oder Ergebnisse optional einschließlich Teilergebnissen in einem Speicher der Steuerung gespeichert, d.h., auf einem Speicher, auf den die Prüfungseinheit der Steuerung Zugriff hat.

In einer Ausgestaltung sind die hinterlegten Daten in Form eines Entscheidungsbaums hinterlegt, den die Prüfungseinheit für die Prüfung verwendet. Die Vielzahl der Parameter können auf diese Weise besonders einfach als Eingangswerte logisch einem Ergebnis zugeordnet werden. Vorzugsweise ist der Entscheidungsbaum in Form eines Entscheidungsalgorithmus hinterlegt.

In einer alternativen oder ergänzenden Ausgestaltung sind die hinterlegten Daten in Form einer Entscheidungsmatrix hinterlegt, die von der Prüfungseinheit für die Prüfung genutzt wird. Eine Entscheidungsmatrix umfasst eine Mehrzahl von Eingangsgrößen oder ist eine mehrdimensionale Tabelle, die ein Ergebnis für jede mögliche Kombination der Eingangswerte zuordnet und ausgibt. Vorzugsweise ist die Entscheidungsmatrix ein sogenannter Lookup-Tables. Alternativ oder ergänzend kann das Ergebnis mit Entscheidungsdiagramme ermittelt werden.

Insbesondere ist der Entscheidungsbaum und/oder die Entscheidungsmatrix konfiguriert zur Verarbeitung der Vielzahl von Parametern als Eingangsgrößen bevorzugt einschließlich die Ist-Werte und/oder Ist-Zustände der mindestens einen Funktionseinheit (Drehzahl, Drehmoment, Drehrichtung und/oder Heizleistung), Stellung der mindestens einen Verriegelungseinrichtung (Verriegelt-Stellung oder Entriegelt-Stellung), Deckelposition (in Schließposition oder nicht), Ist-Zustand der Speise in dem Speisenzubereitungsgefäß (Ist-Füllstand und/oder Ist-Zutaten-Zustand, insbesondere einschließlich Lebensmittelart, Flüssigkeitsanteil, Fettanteil, Ölanteil, Viskosität und/oder Anteil stückiger Lebensmittel), geplanter Ist-Zustand (z.B. angebraten, gegart, geknetet, gemischt, zerkleinert oder gekocht), geplanter Kochprozess (z.B. Anbraten, Garen, Kochen) und/oder weiterer Ist-Zustände der Küchenmaschine (z.B. Ist-Speisenzubereitungsgefäß-Typ, Ist-Deckel-Typ, Ist-Werkzeug-Typ oder Ist-Zubehör-Typs).

Insbesondere ist der Entscheidungsbaum und/oder die Entscheidungsmatrix so konfiguriert, dass erlaubte und/oder tolerierte Parameterbereiche vorgesehen sind. Insbesondere sind diese erlaubten und/oder tolerierten Parameterbereiche definiert durch die Kombination von mindestens fünf, bevorzugt, mindestens zehn, besonders bevorzugt mindestens fünfzehn, und/oder höchstens dreißig Parametern. Beispielsweise kann eine Drehzahl von 100 bis 200 U/min erlaubt und toleriert werden, wenn der Füllstand, die Temperatur und das Drehmoment in einem festgelegten Wertebereich liegt, vorzugsweise unabhängig davon, ob sich der Deckel in der Schließposition befindet oder nicht. In diesem Beispiel wurde ein Parameterbereich unter Berücksichtigung der Kombination von fünf Parametern definiert.

Ein Ergebnis kann mehrere Teilergebnisse beinhalten, z.B. ob eine angeforderte Änderung erlaubt ist oder nicht, ein Ist-Zustand als tolerierbar bewertet wird oder nicht, und/oder eine Spezifikation einer Maßnahme (z.B. falls eine angeforderte Änderung nicht erlaubt oder ein Ist-Zustand nicht tolerabel bewertet wird).

In einer Ausgestaltung umfassen die hinterlegten Daten eine Priorisierung. In der Ausgestaltung des Entscheidungsbaums kann mithilfe einer Priorisierung definiert werden, dass bei Ermitteln von zwei oder mehr Ergebnissen oder zwei gleichrangig alternativen Teilergebnissen anhand der Eingangsgrößen in Form der Vielzahl von Parameter eines der Ergebnisse als das einzige Ergebnis ausgegeben wird.

In der Ausgestaltung der Entscheidungsmatrix kann mithilfe einer Priorisierung zu einer Entscheidung zwischen zwei gleichrangingen Ergebnissen oder Teilergebnissen führen.

Wenn z.B. die Prüfungseinheit zu dem Ergebnis kommt, dass ein Ist-Zustand nicht tolerable ist und als Maßnahme entweder die Drehzahl des Werkzeugs reduziert oder der Deckel zu verriegeln ist, kann durch eine Priorisierung vordefiniert sein, dass eine Reduzierung der Drehzahl stets vorrangig zu behandeln ist und folglich die durch die Steuerung umzusetzende Maßnahme die Reduzierung der Drehzahl ist (auf einen im Ergebnis spezifizierten Soll-Wert).

In einer Ausgestaltung umfassen die hinterlegten Daten mehrstufige Entscheidungsebenen, insbesondere differenziert nach einem rezeptunterstützen Koch-Modus oder nach einem manuellem Koch-Modus. In einer entsprechenden Entscheidungsmatrix können in dieser Ausgestaltung zwei unterschiedliche Lookup-Table hinterlegt sein oder in einem entsprechenden Entscheidungsbaum zwei unterschiedliche Entscheidungsalgorithmen.

In einer Ausführungsform ist die Steuerung so eingerichtet, dass die Steuerung die mindestens eine Funktionseinheit und/oder die mindestens eine Einrichtung zur Beschränkung des Freiheitsgrades, insbesondere eine Verriegelungseinrichtung, gemäß den hinterlegten Daten automatisch modifiziert steuert und/oder einen Hinweis an den Benutzer ausgibt, wenn die Prüfung - durch die Prüfungseinheit - ergeben hat, dass der Ist-Zustand einen erlaubten Bereich verlässt oder verlassen hat.

In einer Ausgestaltung wird ein Hinweis (oder der Hinweis der vorherigen Ausführungsform) an den Benutzer durch die hinterlegten Daten vorgeben und/oder ist in den hinterlegten Daten enthalten, vorzugsweise als ein Ergebnis oder Teilergebnis. Insbesondere wird der Hinweis über eine Ausgabeeinheit dem Benutzer ausgegeben, insbesondere mittels eines Displays, einem Lautsprecher und/oder einem Leichtmittel. Vorzugsweise beinhaltet der Hinweis eine Text-Information oder eine Aufforderung an den Benutzer in Textform oder Sprachform oder in Form eines Aufleuchtens mindestens eines Leuchtmittels.

In einer Ausführungsform ist die Steuerung so eingerichtet, dass die Steuerung die mindestens eine Funktionseinheit entsprechend der angeforderten Änderung steuert, wenn die Prüfung ergeben hat, dass die angeforderte Änderung erlaubt werden kann. Insbesondere erfolgt die Prüfung durch die Prüfungseinheit. Der Freiheitsgrad kann auf diese Weise für den Benutzer erhöht werden. Beispielsweise wird eine angeforderte Erhöhung der Temperatur bei rotierendem Werkzeug und einem Deckel des ersten Deckel-Typs mit der Deckelöffnung zugelassen, auch wenn die Deckelöffnung nicht verschlossen ist, aber der Füllstand niedrig und der Zutaten-Zustand indiziert, dass die Speise bei der angeforderten Soll-Temperatur nicht anbrennt.

In einer Ausführungsform ist die Steuerung so eingerichtet, dass die Steuerung die mindestens eine Einrichtung zur Beschränkung des Freiheitsgrades, insbesondere eine Verriegelungseinrichtung, entsprechend der angeforderten Änderung steuert, wenn die Prüfung ergeben hat, dass die angeforderte Änderung erlaubt werden kann. Insbesondere erfolgt die Prüfung durch die Prüfungseinheit. Der Freiheitsgrad kann auf diese Weise für den Benutzer erhöht werden. Beispielsweise wird eine angeforderte Änderung zum Entfernen des Deckels durch Entriegeln des Deckels zugelassen und der Freiheitsgrad so erhöht, wenn die Prüfung der Ist-Zustände anhand der hinterlegten Daten dies erlauben.

In einer Ausführungsform ist die Steuerung so eingerichtet, dass die Steuerung die mindestens eine Funktionseinheit und/oder die mindestens eine Einrichtung zur Beschränkung des Freiheitsgrades ohne die angeforderte Änderung steuert, wenn die Prüfung ergeben hat, dass die angeforderte Änderung nicht erlaubt werden kann. Der Freiheitsgrad des Benutzers wird hierdurch beispielsweise reduziert (weil die angeforderte Änderung nicht umgesetzt wird), um einen insgesamt höheren Freiheitsgrad des Benutzers an anderer Stelle aufrechtzuerhalten. Beispielsweise wird eine angeforderte Änderung in Form einer höheren Drehzahl, die der Benutzer an der Küchenmaschine anfordert, nicht umgesetzt, weil z.B. sich der Deckel nicht in Schließposition befindet und auf Basis der übrigen Parameter z.B. einschließlich Temperatur und/oder Füllstand gemäß der hinterlegten Daten in dieser Situation keine höhere Drehzahl erlaubt werden kann, um einen gewohnten Kochkomfort weiterhin sicherzustellen.

In einer Ausführungsform ist die Steuerung so eingerichtet, dass die Steuerung einen Hinweis an den Benutzer ausgibt, wenn die Prüfung ergeben hat, dass die angeforderte Änderung nicht erlaubt werden kann. Der Benutzer wird auf diese Weise darüber informiert, dass eine angeforderte Änderung nicht umgesetzt wurde und insbesondere der Grund hierfür wird ebenfalls ausgegeben. In einer Ausgestaltung wird in Fällen, in denen der gewohnte Kochkomfort mit einer Küchenmaschine noch durch die angefragte Änderung eingehalten werden kann, die angefragte Änderung trotz negativer Prüfung umgesetzt und der Benutzer lediglich ein Hinweis für das negative Ergebnis der Prüfung ausgegeben. Dies gibt dem Benutzer den erhöhten Freiheitsgrad, die angeforderte Änderung wieder zurück zu ändern oder in Kenntnis der Folgen den Kochvorgang unverändert fortzusetzen. Beispielsweise wird eine angeforderte Temperaturerhöhung des Benutzers zwar umgesetzt, aber dafür der Hinweis ausgegeben, dass hierdurch die Speise voraussichtlich anbrennen wird.

In einer Ausführungsform ist die Steuerung so eingerichtet, dass die Steuerung so eingerichtet ist, dass die Steuerung die mindestens eine Funktionseinheit und/oder die mindestens eine Einrichtung zur Beschränkung des Freiheitsgrades mit einer modifizierten Änderung, die der angeforderte Änderung gemäß der hinterlegten Daten am nächsten kommt, steuert und/oder einen Hinweis an den Benutzer ausgibt, wenn die Prüfung ergeben hat, dass die angeforderte Änderung nicht erlaubt werden kann.

Wenn der Benutzer beispielsweise eine Änderung der Drehzahl auf eine bestimmte hohe Stufe (mit z.B. 3100 U/min) anfordert, indem der Benutzer einen Drehknopf oder ein Bildzeichen auf einem Touchscreen-Display entsprechend betätigt, wird die Steuerung die Drehzahl modifiziert lediglich auf eine niedrigere Stufe (mit z.B. 2000 U/min) als die angeforderte, hohe Stufe (mit 3100 U/min) ändern und den Benutzer optional darüber durch einen Hinweis informieren, wenn die modifiziert geänderte Stufe (mit z.B. 2000 U/min) als nächste Drehstufe zur angefragten Änderung der Drehstufe noch die vordefinierten Kriterien zum Erlauben der angefragten Änderung erfüllt. Insbesondere wird die modifizierte Änderung durch die Prüfungseinheit ermittelt.

In einer Ausführungsform ist die Steuerung so eingerichtet, dass im rezeptunterstützen Koch-Modus zu Beginn des Speisenzubereitungsvorgangs alle Rezeptschritte des digitalen Rezepts oder nur Rezeptschritte mit manuellen Aktionen des Benutzers auf angeforderte oder erforderliche Stellzustände der mindestens einen Einrichtung zur Beschränkung des Freiheitsgrades und/oder angeforderte oder erforderliche Gerätezustandsänderungen geprüft werden. Es werden solche Änderungen davon gesammelt, die den Freiheitsgrad des Benutzers beschränken und/oder eine manuelle Aktion des Benutzers erfordern. Eine solche manuelle Aktion, die auch den Freiheitsgrad des Benutzers beschränkt, ist insbesondere ein Auflegen des Deckels auf das Speisenzubereitungsgefäß durch den Benutzer. Dies ermöglichst ein Vorziehen insbesondere aller manuellen Aktionen des Benutzers, so dass der Benutzer für eine möglichst lange Zeitdauer nicht für manuelle Aktionen gebraucht wird. Mit anderen Worten kann auf diese Weise dazu aufgefordert werden, bereits zu Anfang alle erforderlichen und zu Anfang möglichen, nicht automatisierbaren Aktionen vorzunehmen, um die Küchenmaschine möglichst lange selbstständig arbeiten lassen zu können. Eine Reduzierung der Zeit, die der Benutzer an der Küchenmaschine für manuelle Benutzerinteraktionen oder Aktionen zu verbringen hat, wird so erzielt.

Die Prüfung erfolgt insbesondere durch die Prüfungseinheit mithilfe der hinterlegten Daten.

In einer alternativen oder ergänzenden Ausführungsform ist die Steuerung so eingerichtet, dass im rezeptunterstützen Koch-Modus zu Beginn jedes Rezeptschrittes oder jedes Rezeptschrittes - insbesondere jedes Rezeptschrittes mit mindestens einer manuellen Aktion des Benutzers - der Rezeptschritt auf angeforderte oder erforderliche Stellzustände der mindestens einen Einrichtung zur Beschränkung des Freiheitsgrades und/oder angeforderte oder erforderliche Gerätezustandsänderungen geprüft werden. Es werden solche Änderungen davon gesammelt, die den Freiheitsgrad des Benutzers beschränken und/oder eine manuelle Aktion des Benutzers erfordern, wie z.B. ein manuelles Auflegen des Deckels auf das Speisenzubereitungsgefäß. Es handelt sich hierbei folglich um eine schrittweise Prüfung durch die Prüfungseinheit. Hierdurch können manuelle Aktionen des Benutzers vorgezogen werden, so dass der Benutzer möglichst lange nicht aktiv eingreifen muss.

Das Vorziehen einer Änderung, die den Freiheitsgrad des Benutzers beschränk, ist zum Beispiel das Abdecken des Speisenzubereitungsgefäßes mit dem Deckel in der Schließposition. Wenn erst im Verlaufe eines Rezeptes oder eines Rezeptschrittes das Abdecken des Speisenzubereitungsgefäßes mit dem Deckel als manuelle Aktion des Benutzers erforderlich wird, ist eine Anwesenheit des Benutzers bis zu diesem Zeitpunkt erforderlich. Gemäß der oben beschriebenen Ausführungsformen würde durch das Sammeln dieser manuellen Aktionen oder Änderungen der Benutzer gleich zu Anfang des Rezeptes oder Rezeptschrittes dazu aufgefordert, den Deckel in die Schließposition zu bringen, so dass der Benutzer an dem oben erwähnten Zeitpunkt, zu dem diese Aktion eigentlich erst erforderlich wird, nicht mehr gebraucht wird, weil der Deckel bereits zu Anfang in die Schließposition gebracht worden ist.

In einer Ausgestaltung ist die Steuerung so eingerichtet, dass die Steuerung, insbesondere die Prüfungseinheit der Steuerung, anhand von hinterlegten Entscheidungskriterien die zu sammelnden Änderungen ermittelt, die den Freiheitsgrad des Benutzers beschränken und eine manuelle Aktion des Benutzers erfordern.

Ein weiterer Aspekt der Offenbarung zur Lösung der Aufgabe betrifft ein Verfahren zum Durchführen eines Speisenzubereitungsvorgangs durch Erhitzen, Zerkleinern und/oder Rühren einer Speise in einem Speisenzubereitungsgefäß mithilfe eines Heizelements zum Erhitzen und/oder einem drehbaren Werkzeug zum Zerkleinern und/oder Rühren der Speise in dem Speisenzubereitungsgefäß. Die Küchenmaschine umfasst mindestens eine Funktionseinheit einschließlich einem Motor zum Drehen des Werkzeugs und/oder dem Heizelement zum Erhitzen. Die Küchenmaschine umfasst mindestens eine Einrichtung zur Beschränkung eines Freiheitsgrades eines Benutzers während der Benutzung der Küchenmaschine für eine Speisenzubereitung einschließlich mindestens eine motorbetriebene Verriegelungseinrichtung für das Speisenzubereitungsgefäß oder dessen Deckel. Das Verfahren zeichnet sich durch folgende Schritte aus: Steuern der mindestens einen Funktionseinheit und die mindestens eine Einrichtung zur Beschränkung des Freiheitsgrades auf Basis von einer Vielzahl von Parametern, die den Speisenzubereitungsvorgang beschreiben oder Einfluss darauf haben können, derart, dass eine Reduzierung oder Erhöhung des Freiheitsgrades des Benutzers während der Benutzung der Küchenmaschine in Abhängigkeit von der Vielzahl der Parameter erfolgen kann.

Der Freiheitsgrad des Benutzers kann hierdurch während der Zubereitung einer Speise mit einer Küchenmaschine verbessert und/oder erhöht werden. Die Merkmale, Wirkungen und Ausführungsformen der oben beschriebenen Aspekte der Erfindung gelten auch für diesen Aspekt der Erfindung und können damit kombiniert werden.

In einer Ausgestaltung wird ein Ist-Zustand und/oder eine angeforderte Änderung, die in der Vielzahl von Parametern erhaltenen sind, von einer Prüfungseinheit als Eingangsgrößen empfangen. Insbesondere folgt ein Schritt des Prüfens der empfangenen Eingangsgrößen, vorzugsweise durch die Prüfungseinheit, mithilfe von hinterlegten Daten, ob die angeforderte Änderung erlaubt werden kann oder nicht, und/oder ob der Ist-Zustand toleriert werden kann oder nicht, insbesondere ob der Ist-Zustand einen erlaubten Bereich verlässt oder verlassen hat.

Falls der Ist-Zustand nicht toleriert werden kann oder einen erlaubten Bereich verlässt oder verlassen hat und/oder falls die angeforderte Änderung nicht erlaubt werden kann, wird das Verfahren wie folgt fortgesetzt:
- Steuern der mindestens einen Funktionseinheit und/oder der mindestens einen Einrichtung zur Beschränkung des Freiheitsgrades, insbesondere einer Verriegelungseinrichtung, anhand von automatisch modifizierten Änderungen gemäß den hinterlegten Daten, und/oder
- Ausgeben eines Hinweises an den Benutzer gemäß der hinterlegten Daten.

Insbesondere beträgt eine von der Prüfungseinheit in Verbindung mit den hinterlegten Daten maximal erlaubte Drehgeschwindigkeit des Werkzeugs 400 Umdrehungen pro Minute, wenn sich der Deckel nicht in der Schließposition befindet.

Insbesondere beträgt eine von der Prüfungseinheit in Verbindung mit den hinterlegten Daten maximal erlaubte Stromstärke zum Versorgen des Motors für ein Drehen des Werkzeugs bevorzugt 0,8 A oder 1 A, wenn sich der Deckel nicht in der Schließposition befindet. Das Drehmoments des Werkzeugs kann auf diese Weise besonders wirkungsvoll begrenzt werden, beispielsweise auf 0,5 N*m, so dass ein Kochen auch mit offenem Deckel und drehendem Werkzeug von der Prüfungseinheit insbesondere durch ein modifiziertes Ansteuern des Motors durch die Steuerung erlaubt werden kann. Der gewohnte Kochkomfort beim Kochen mit einer Küchenmaschine kann auf diese Weise sichergestellt werden.

Ein weiterer Aspekt der Offenbarung betrifft ein Computerprogramm umfassend Befehle, die bei der Ausführung des Programms durch die Steuerung diese veranlassen, das oben beschriebene Verfahren auszuführen.

Ein weiterer Aspekt der Offenbarung zur Lösung der Aufgabe betrifft eine Küchenmaschine zum Durchführen eines Speisenzubereitungsvorgangs durch Erhitzen, Zerkleinern und/oder Rühren einer Speise in einem Speisenzubereitungsgefäß mithilfe eines Heizelements zum Erhitzen und einem drehbaren Werkzeug zum Zerkleinern und/oder Rühren der Speise in dem Speisenzubereitungsgefäß, wobei die Küchenmaschine eine Verriegelungseinrichtung für einen Deckel aufweist, die in einer Verriegelt-Stellung den Deckel in einer geschlossenen Position auf dem Speisenzubereitungsgefäß verriegelt und in einer Entriegelt-Stellung den Deckel entriegelt, so dass der Deckel vom Benutzer von dem Speisenzubereitungsgefäß entfernt und damit das Speisenzubereitungsgefäß geöffnet werden kann. Die Küchenmaschine ist in diesem Aspekt der Offenbarung so eingerichtet, dass während des Speisenzubereitungsvorgangs die Verriegelungseinrichtung für den Deckel die Entriegelt-Stellung einnimmt, wenn eine Ist-Drehzahl des Werkzeugs in einem Drehzahl-Bereich zwischen einer Mindestdrehzahl größer Null und einer Höchstdrehzahl liegt. Der Freiheitsgrad des Benutzers kann hierdurch während der Zubereitung einer Speise mit einer Küchenmaschine verbessert erhöht werden. Der Drehzahl-Bereich ist insbesondere in hinterlegten Daten definiert. In einer Ausgestaltung ist die Steuerung so eingerichtet, dass der Deckel sich in der Entriegelt-Stellung befindet oder der Deckel entriegelt wird, wenn sich das Werkzeug in einem bestimmten Drehzahlbereich dreht oder ein bestimmter Drehzahlbereich von einem Rezeptschritt oder dem Benutzer (über die Benutzerschnittstelle der Küchenmaschine) angefordert wird. Die Merkmale, Wirkungen und Ausführungsformen der oben beschriebenen Aspekte der Erfindung gelten auch für diesen Aspekt der Erfindung und können damit kombiniert werden.

Bei einer Änderung eines Ist-Zustands (z.B. Deckel plötzlich nicht mehr in Schließposition oder die Temperatur ist schlagartig gesunken) oder bei einem angeforderten Soll-Zustand (z.B. vom Benutzer eingegebene Drehzahl, Temperatur oder Drehrichtung) erfolgt eine Prüfung hinsichtlich der davon abhängigen Geräteeinstellungen und Parameterbereiche. Wenn die Prüfung ergibt, dass eine andere Geräteeinstellung durch die Änderung des Ist-Zustands erforderlich wird, um den gewohnten Kochkomfort sicherzustellen, erfolgt eine entsprechende Änderung der Geräteeinstellung. Wenn die Prüfung ergibt, dass eine andere Geräteeinstellung durch einen angeforderten Soll-Zustand erforderlich wird, erfolgt eine entsprechende Änderung der Geräteeinstellung und vorzugsweise ein Hinweis über erlaubte Soll-Bereiche oder durch den Benutzer umzusetzende Änderungen der Geräteeinstellungen, welche die angeforderte Änderung erlaubbar machen würde (z.B. Deckel in die Schließposition bringen). Insbesondere ist mindestens eine Geräteeinstellung und/oder mindestens ein Parameterbereich von einem Ist-Zustand oder angefordertem Soll-Zustand abhängig.

In einer Ausgestaltung umfasst die Küchenmaschine mindestens einen Sensor zum Erfassen von mindestens einem Parameter einer Vielzahl von Parameter der Küchenmaschine und des Speisenzubereitungsvorgangs, wobei die Küchenmaschine mindestens eine Prüfeinheit zum Sicherstellen des Kochkomforts für den Benutzer bei der Speisenzubereitung mit der Küchenmaschine aufweist und dazu mindestens eine Sicherungseinrichtung aktiviert, beispielsweise eine Verriegelungseinrichtung für ein Verriegeln einer Komponente, so dass eine Zugangsmöglichkeit des Benutzers zur Speise beschränkt wird. Die Küchenmaschine ist in dieser Ausgestaltung ferner so konfiguriert, dass die Prüfeinheit in Abhängigkeit von mindestens einem der Vielzahl von Parameter mindestens eine der mindestens einen Sicherheitseinrichtung während eines Speisenzubereitungsvorgangs deaktiviert. In einer Ausgestaltung beinhaltet die Vielzahl der Parameter einen Ist-Zustand, der den Druck in dem Speisenzubereitungsgefäß wiederspiegelt.

In einer Ausgestaltung wird ein digitales Rezept von der Steuerung durch die Prüfeinheit mithilfe der hinterlegten Daten insbesondere unter Berücksichtigung einer Zutatenkategorie (einschließlich einer Information zu einem Fett- oder Öl-Anteil) auf Basis des digitalen Rezeptes und/oder auf Basis einer Zutatenanalyse durch mindestens einen Sensor geprüft, um den maximalen Freiheitsgrad für den Benutzer (also minimal mögliche Sicherheitseinrichtungen) umzusetzen. Insbesondere kann eine Verriegelungseinrichtung als Sicherheitseinrichtung dienen. Insbesondere kann ein Aktivieren einer Verriegelungseinrichtung als Sicherheitseinrichtung durch einen Rezeptschritt definiert werden, vorzugsweise individuell für jeden Rezeptschritt.

In einer Ausgestaltung werden zu Beginn eines Speisenzubereitungsvorgangs insbesondere im manuellen Koch-Modus alle Sicherheitseinrichtungen einschließlich der mindestens einen Verriegelungseinrichtung nur so wenig und gering wie möglich aktiviert, damit der Benutzer eine maximale Zugangsmöglichkeit zur Speise erhält, wobei im Verlauf des Speisenzubereitungsvorgangs in Abhängigkeit einer Prüfung durch die Prüfeinheit wenn nötig eine oder mehr weitere Sicherheitseinrichtungen zu aktivieren und die Zugangsmöglichkeit des Benutzers zur Speise dadurch reduziert wird. Wenn im weiteren Verlauf des Speisenzubereitungsvorgangs in Abhängigkeit der Prüfung durch die Prüfeinheit ein Reduzieren der aktivierten Sicherheitseinrichtungen möglich wird, erfolgt dies, so dass der Freiheitsgrad des Benutzers kontinuierlich reduziert und erhöht, jedoch insgesamt maximiert wird. Hierdurch kann beispielsweise eine Verzögerungszeit, auch Totzeit genannt, während eines Wechsels von einer Verriegelt-Stellung in eine Entriegelt-Stellung für den Benutzer vermieden werden, wenn die Entriegelt-Stellung bereits zum frühestmöglichen Zeitpunkt erfolgt, wenn der Benutzer den Deckel noch gar nicht zu öffnen versucht.

In einer Ausgestaltung wird vorzugsweise im rezeptunterstützen Koch-Modus zu Beginn alle nötigen Sicherheitseinrichtungen aktiviert, und nach Beginn des Kochvorgangs sukzessive deaktiviert und reduziert in Abhängigkeit von der Prüfung durch die Prüfeinheit und/oder - wenn möglich - vor dem Ende des Kochvorgangs eines Rezeptschrittes.

In einer Ausgestaltung umfasst eine Einrichtung zur Beschränkung eines Freiheitsgrades eines Benutzers eine Sicherheitseinrichtung. Insbesondere kann eine Sicherheitseinrichtung durch die Prüfeinheit realisiert werden, in dem kritische Bereiche von Parameterkombinationen nicht erlaubt oder toleriert werden.

Durch die vorliegende Offenbarung wird ermöglichst, in Abhängig von der Art der Benutzung Kochparameterbereiche zu erlauben und/oder Einrichtungen (insbesondere Sicherheitseinrichtungen) zu aktivieren bzw. zu deaktiviert, wie z.B. die mindestens eine Verriegelungseinrichtung. Einfach ausgedrückt gibt der Benutzer an bzw. fordert, was er möchte, und die Küchenmaschine versucht dies umzusetzen und steuert die Funktionseinheit und/oder Einrichtung entsprechend an, wie es hierzu notwendig ist. Es wird sichergestellt, dass Soll-Werte (z.B. Drehrichtung, Drehmoment, Drehgeschwindigkeit, Heizleistung) erlaubt werden, die im jeweiligen Betriebszustand einen gewohnten Kochkomfort ermöglichen und es zugleich dem Benutzer ermöglichen, der Deckel schnell abnehmen zu können, das Speisenzubereitungsgefäß zügig entfernen zu können, die Drehrichtung frei wählen zu können, die Drehgeschwindigkeit frei wählen zu können und/oder die Solltemperatur frei bzw. in begrenzten Bereichen wählen zu können.

Insbesondere wird immer ein "möglichst offener" Zustand von der Steuerung angestrebt, der einen schnellstmöglichen Zugriff auf die Speise in dem Speisenzubereitungsgefäß bzw. den Kochvorgang ermöglicht.

Insbesondere unterstützt der Motor verschiedene Drehrichtungen (Rechtslauf, Linkslauf), verschiedene Drehzahlen und/oder verschiedene Drehmomente. Insbesondere ist ein integriertes und/oder regelbares Heizelement mit verschiedenen Temperaturbereichen vorgesehen.

In einer Ausgestaltung erfolgt eine Anpassung entweder ereignisgesteuert oder verwendungsabhängig, insbesondere unter Berücksichtigung eines identifizierten Benutzungsszenarios, das bevorzugt durch eine Prüfung der Vielzahl von Parametern erfasst wird.

Bei der ereignisgesteuerten Ausgestaltung wird eine Deckelposition (Deckel nicht vorhanden, Deckel in Schließposition, Deckel verriegelt) detektiert und in Abhängigkeit davon eine Vorauswahl der erlaubten oder tolerierten Drehgeschwindigkeit, Drehrichtung und/oder der Solltemperatur definiert (in den hinterlegten Daten).

Bei der verwendungsabhängigen Ausgestaltung können Rezeptvorgaben und/oder die Prüfung im laufenden Speisenzubereitungsprozess durch die Prüfeinheit umgesetzt werden, insbesondere wie in den folgenden Beispielen angegeben. Beispielsweise können Rezepte vordefinierten Rezeptclustern zugeordnet werden, die als Indikator dienen (oder in den hinterlegten Daten aufgenommen werden), was erlaubt / toleriert werden kann. Insbesondere wird bei Rezepten mit großen Flüssigkeitsanteilen, die >95°C erhitzt werden, der Deckel in Schließposition verlangt. Insbesondere wird bei Rezepten mit großen Flüssigkeitsanteilen, großen absoluten Flüssigkeitsmengen, die mit großen Drehzahlen gerührt/püriert werden, der Deckel im Verriegelt-Zustand verlangt. Insbesondere wird bei Rezepten ohne Fett oder Öl, in denen hohe Temperaturen verwendet werden und das Werkzeug stillsteht (Drehzahl gleich Null) auch ein geöffneter Deckel erlaubt oder toleriert, der sich also nicht in der Schließposition befindet.

Insbesondere wird ein geöffneter Deckel erlaubt oder toleriert, wenn ein bestimmter Speisenzubereitungsgefäß-Typ in der Aufnahme detektiert wurde, der einem vordefinierten Typ mit besonderer Größe zugeordnet werden kann, und die Drehzahl Null ist.

In einer Ausgestaltung werden Maschinenparameter der Steuerung bzw. der Küchenmaschine als Parameter oder zur Ermittlung von Parametern für die Vielzahl der Parameter genutzt, insbesondere als Indikator, vorzugsweise als Ist-Zustand oder Ist-Wert für eine zugefüllte Lebensmittelmenge bzw. im Speisenzubereitungsgefäß befindliche Lebensmittelmenge, eine Viskosität einer Zutat oder der Speise (insbesondere ermittelt auf Basis des Motorstrom zum Drehen des Werkzeugs), und/oder eine Stückigkeit einer Zutat oder der Speise (z.B. bei Gulasch). Vorzugsweise ist die Stückigkeit ermittelbar anhand des Motorstrompeaks oder über eine schnelle Temperaturänderungen am Temperatursensor (z.B. wenn ein kaltes Stück auf den Temperatursensor nach einem diskontinuierlichen Rührschritt fällt) oder über eine Schwerpunktsverlagerung der gesamten Küchenmaschine oder eine Unwucht, was durch die Gewichtssensoren in den Standfüßen detektiert werden kann. Wenn stückiges Gargut (und keine Flüssigkeit) detektiert wird, kann der Deckel entriegelt werden. Insbesondere ist ein weiterer Ist-Zustand oder Ist-Wert eine ermittelte Aufheizgeschwindigkeit in Relation zur eingesetzten Heizleistung, um auf die Wärmekapazität und darüber auf das Lebensmittel zu schließen (weil flüssige oder niedrigviskose und damit zum Spritzen neigende Lebensmittel und Speisen eine im Mittel geringere spezifische Aufheizgeschwindigkeit als höherviskose Lebensmittel oder Speisen bei gleicher Heizleistung haben). Somit kann dieses Kriterium vorzugsweise bei der Prüfung herangezogen werden, ob ein Deckel in Schließposition notwendig ist oder nicht. Insbesondere kann mit einem verriegelten Deckel der Speisenzubereitungsvorgang begonnen werden und dann unter Berücksichtigung der Ist-Viskosität bei der Prüfung durch die Prüfeinheit der Deckel entriegelt und bei Bedarf wieder verriegelt werden.

Insbesondere kann bei einem Speisenzubereitungsgefäß des größeren Typs eine größere Drehgeschwindigkeit erlaubt und/oder toleriert werden als bei einem kleineren Typ. Beispielsweise können bestimmte Funktionen oder Parameterbereiche bei einem ersten Werkzeug-Typ zum Rühren erlaubt und/oder toleriert werden, die bei einem anderen Werkzeug-Typ zum Schneiden nicht erlaubt und/oder nicht toleriert werden.

Insbesondere sind wenigstens drei, fünf oder alle der folgenden Parameter bei der Prüfung besonders relevant: Drehzahl, Temperatur, Druck, Füllmenge, Zubehör-Typ, Lebensmittelart, Zubereitungsart.

In einer Ausgestaltung werden ein oder mehrere Sicherheitseinrichtungen entsprechend der Prüfung der Vielzahl der Parameter ausgewählt und zwecks Aktivierung angesteuert, insbesondere unter Zuordnung zu einer Klassifizierung für ein Reduzieren der Datenmenge der hinterlegten Daten.

In einer Ausgestaltung wird die Notwendigkeit des Vorhandenseins des Deckels in der Schließposition und/oder der Notwendigkeit der Verriegelt-Stellung des Deckels und/oder des Speisenzubereitungsgefäßes mehrstufig unterschieden, vorzugsweise zur Umsetzung eines Entscheidungsbaums mit reduzierter Datenmenge. Insbesondere wird hierzu zunächst in einer ersten Entscheidungsebene unterschieden, ob im manuellen Koch-Modus oder rezeptunterstützten Koch-Modus gekocht wird. Beispielsweise wird im rezeptunterstützten Koch-Modus der Deckel in der Schließposition verlangt und/oder im manuellen Koch-Modus kann der Deckel entfernt von der Schließposition bleiben. Vorzugsweise ist eine zweite Entscheidungsebene vorgesehen, die auf Basis der Drehzahl die Prüfung auf Erlaubtheit und/oder Tolerierbarkeit durchführt. Insbesondere ist eine dritte Entscheidungsebene vorgesehen, die zwischen ereignisgesteuerter und verwendungsabhängiger Anpassung differenziert.

In einer Ausgestaltung werden zusätzliche Parameterbereiche der Kochparameter in Abhängigkeit von mindestens einem Verriegelungszustand zur Erhöhung des Freiheitsgrades des Benutzers freigegeben. Wird vom Benutzer (oder vom Rezeptschritt) z.B. eine Drehzahl oberhalb einer in den hinterlegten Daten definierten Deckelverriegelungs-Drehzahlgrenze angefordert, so wird diese nur dann von der Steuerung umgesetzt, wenn sich der Deckel in der Schließposition befindet und zusätzlich verriegelt ist, so dass er nicht manuell geöffnet werden kann. Es wird ferner sichergestellt, dass ein manuelles Öffnen des Deckels erst wieder möglich ist, wenn das Werkzeug eine bestimmte Drehzahlgrenze unterschritten hat. Bevorzugt kann eine zusätzliche Wartezeit definiert sein, die zu verstreichen hat, bis der Deckel wieder geöffnet werden kann. Hierdurch wird erreicht, dass die Bewegungen von dem Werkzeug und der Speise im Speisenzubereitungsgefäß abgeklungen sind. Insbesondere ist ein Sensor oder Sensoren vorgesehen, die detektieren können, ob ein Deckel in der Schließposition auf dem Speisenzubereitungsgefäß (unverriegelt) aufliegt und/oder ob ein Deckel in der Schließposition auf dem Speisenzubereitungsgefäß aufliegt und zugleich verriegelt ist.

In einer Ausgestaltung ist für den Motor des Werkzeugs eine Drehzahlregelung vorgesehen, wobei die Drehzahl überwacht wird und bei Überschreiten der Verriegelungs-Drehzahlgrenze eine Maßnahme getroffen wird, wenn der Deckel nicht verriegelt ist. Insbesondere ist bei drehendem Werkzeug ohne Deckel in Schließposition eine Drehrichtungsbegrenzung und/oder eine Drehmomentbegrenzung vorgesehen.

Es kann vorkommen, dass das Werkzeug zwar mit geringer Drehzahl betrieben wird und die Bedingungen für ein entriegelten Deckel erfüllt sind, der Benutzer aber den Deckel dennoch verriegeln möchte, z.B. um zu verhindern, dass dieser durch Dampf oder bewegte Zutaten angehoben wird. Für diesen Fall wird in einer Ausgestaltung eine Möglichkeit zur Aktivierung der Verriegelung durch den Benutzer vorgesehen, zum Beispiel durch Betätigen eines entsprechenden Knopfs oder durch manuelles Betätigen eines mechanischen Verriegelungsmechanismus. Alternativ oder ergänzend ist es auch möglich, ein Verriegeln des Deckels im Bedarfsfall (bei allen Betriebsbedingungen entsprechende Voreinstellungen) zu erzwingen.

In der Ausgestaltung der verwendungsabhängigen Anpassung wird die Küchenmaschine insbesondere so konfiguriert, dass in einem für den aktuellen Verwendungsfall bevorzugt mit maximalen Sicherheitsvorkehrungen der Speisenzubereitungsvorgang gestartet wird. Vorzugsweise wird anhand einer Analyse des digitalen Rezeptes oder Rezeptschrittes (z.B. durch die zu verwendete maximale Drehzahl oder maximale Temperatur) die benötigte Sicherheitsvorkehrung (z.B. Verriegelt-Stellung des Deckels und/oder des Speisenzubereitungsgefäßes) für den gesamten Speisenzubereitungsvorgangs oder nur für einen oder mehrere Rezeptschritte vorgegeben. Insbesondere kann eine nächster Schritt vorgesehen werden, bei dem die benötigten Sicherheitsvorkehrungen durch die Prüfung der Vielzahl von Parametern (durch die Prüfeinheit) reduziert werden. Beispielsweise können mehrere Rezeptschritten in einer Abfolge abgearbeitet werden, wobei nur in einem letzten Schritt der Deckel in Schließstellung benötigt wird (in allen anderen Rezeptschritten aber nicht). Dieser würde dann bei dem ersten Rezeptschritt angefordert, damit die Kochschritte ohne Unterbrechung durchgeführt werden können.

Durch die Lösung der vorliegenden Offenbarung wird also ermöglichst, Benutzungsszenarios zu identifizieren und abhängig davon Sicherheitseinrichtungen zu aktiviert oder zu deaktivieren. Ein Aktivieren einer Sicherheitseinrichtung bedeutet ein Wechsel in eine Stellung oder einen Zustand, der den Freiheitsgrad des Benutzers (und insbesondere dessen Zugangsmöglichkeit zur Speise) reduziert, z.B. ein Verriegeln eines Deckels oder Speisenzubereitungsgefäßes. In Abhängigkeit von angeforderten Soll-Werten (insbesondere z.B. Drehzahl, Temperatur) wird auf Basis der Prüfung anhand der hinterlegten Daten entschieden, ob der Deckel sich in Schließposition befinden muss und/oder verriegelt sein muss. Wenn die Kriterien erfüllt sind, wird der Prozessschritt mit den geforderten Soll-Werten gestartet. Andernfalls wird der Benutzer mithilfe eines ausgegebenen Hinweises informiert, dass z.B. der Decke aufgelegt werden muss. Legt der Benutzer den Deckel nach dem Hinweis nicht auf (d.h., in Schließposition), kann der Rezeptschritt bei Erfüllung anderer Kriterien mit modifizierten Soll-Werten durchgeführt werden, die gegenüber den geforderten Werten limitiert sind. Ist der Deckel beispielsweise während eines laufenden Rezeptschrittes aufgelegt (in Schließposition), aber nicht verriegelt, weil die Drehzahl dies erlaubt, und wird der Deckel dann spontan vom Benutzer abgenommen, so wird dies detektiert und das Drehmoment (und insbesondere auch die Drehzahl) so angepasst, dass der Benutzer mit dem gewohnten Kochkomfort weiter kochen kann. Im rezeptunterstütztem Koch-Modus, auch Guided Cooking genannt, werden die erforderlichen Betriebszustände (Deckel in Schließposition, Deckel verriegelt durch Verriegelt-Stellung, und/oder Speisenzubereitungsgefäß verriegelt durch Verriegelt-Stellung) in Abhängigkeit von den geplanten bzw. geforderten Soll-Werten des digitalen Rezepts oder der Rezeptschritte ermittelt. Dem Benutzer wird über einen Hinweis mitgeteilt, ob der Deckel aufgelegt werden muss. Bei speziellen Prozessschritten kann es auch erforderlich sein, den Deckel nicht aufzulegen (in Schließposition), z.B. um ein ungehindertes Ausströmen von Dampf zu ermöglichen. In diesen Fällen wird der Benutzer aufgefordert, den Deckel zu entfernen.

Ein Identifizieren eines Benutzungsszenarios und automatisches Anpassen von Betriebszuständen, die ein Kochen mit der Küchenmaschine mit gewohnten Kochkomfort ermöglichen, wird so ermöglichst und ein effizienteres Kochen und eine effizientere Handhabung wird durch das adaptive Geräteverhalten in Abhängigkeit von dem Benutzungsszenario ermöglicht.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: Schematische Darstellung einer erfindungsgemäßen Küchenmaschine mit einem Teilschnitt durch das Speisenzubereitungsgefäß;
- Figur 2:: Schematisches Ablaufdiagramm zur Reduzierung oder Erhöhung des Freiheitsgrades des Benutzers während der Benutzung der Küchenmaschine in Abhängigkeit von einer Vielzahl von Parameter;
- Figur 3a:: Exemplarische Illustration bezüglich der Reduzierung oder Erhöhung des Freiheitsgrades des Benutzers während der Benutzung der Küchenmaschine, wenn sich der Deckel in der Schließposition befindet;

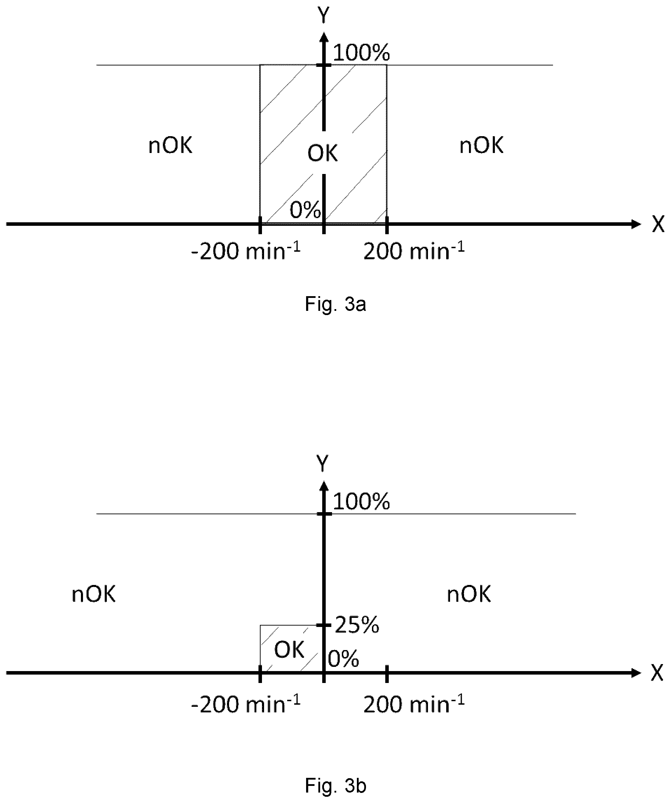

- Figur 3a:: Exemplarische Illustration bezüglich der Reduzierung oder Erhöhung des Freiheitsgrades des Benutzers während der Benutzung der Küchenmaschine, wenn sich der Deckel nicht in der Schließposition befindet.

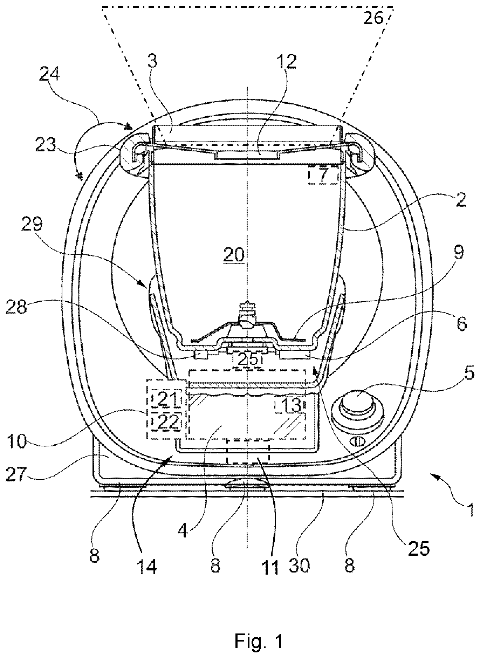

Die Figur 1 zeigt eine Küchenmaschine 1 zum Durchführen eines Speisenzubereitungsvorgangs in einem Speisenzubereitungsgefäß 2. Ein Heizelement 6 kann zum Erhitzen der Speise 20 insbesondere im Bodenbereich des Speisenzubereitungsgefäßes 2 vorhanden sein. Zum Zerkleinern und/oder Rühren der Speise 20 kann ein drehbares Werkzeug 9 eingesetzt sein, das über eine nicht gezeigte Welle insbesondere durch eine Öffnung im Boden des Speisenzubereitungsgefäßes 2 mit einem Motor 11 gekoppelt ist. Ein Gehäuse 27 der Küchenmaschine umschließt den Motor 11 und stellt eine Aufnahme 29 für das Speisenzubereitungsgefäß 2 bereit. Die Aufnahme 29 kann im einfachsten Fall eine an die Unterseite des Speisenzubereitungsgefäßes 2 angepasste Fläche an der Oberseite des Gehäuses 27 sein, die im Wesentlichen eben sein kann. Insbesondere sind ein oder mehrere Gewichtssensoren 8 vorzugsweise in den Standfüßen der Küchenmaschine 1 vorgesehen, durch die das Gehäuse 27 auf einem Untergrund 30 steht. Die Küchenmaschine 1 hat eine Steuerung 10 zum Ansteuern der Funktionskomponente wie Heizelement 6 oder Werkzeug 9 bzw. Motor 11. Messsensoren zum Erfassen eines Ist-Zustands wie z.B. ein Temperatursensor 28 sind vorzugsweise vorhanden. Die Steuerung 10 umfasst oder wird betrieben durch mindestens einen Prozessor 21 und mindestens einen Speicher 22. Die Steuerung 10 kann teilweise in eine Cloud ausgelagert sein, wobei dann mindestens ein Prozessor und mindestens ein Speicher der Steuerung 10 auf einem Cloud-Server befinden, vorzugsweise auf einem Cloud-Server eines externen Rechenzentrums. In einer Ausgestaltung kann ein Smartphone eines Benutzers der Cloud-Server sein oder einen Teil der Steuerung darstellen oder betreiben.

Ein Deckel 3 kann zum Schließen des Speisenzubereitungsgefäßes 2 vorgesehen sein. Der Deckel 3 kann eine Deckelöffnung 12 enthalten, um Zutaten in das durch den Deckel 3 überwiegend abgedeckte Speisenzubereitungsgefäßes 2 zu geben. Eine motorbetriebene Verriegelungseinrichtung 23 für den Deckel 3, also zum Verriegeln des Deckels 3 mit dem Speisenzubereitungsgefäß 2, ist vorgesehen. Mithilfe von beweglichen Verriegelungsmitteln der Verriegelungseinrichtung 23 kann der Deckel 3 an der Oberseite des Speisenzubereitungsgefäßes 2 in einen verriegelten Zustand oder gelösten Zustand gebracht werden. Ferner ist eine motorbetriebene Verriegelungseinrichtung 25 für das Speisenzubereitungsgefäß 2, also zum Verriegeln des Speisenzubereitungsgefäßes 2 mit der Aufnahme 29 des Gehäuses 27 der Küchenmaschine 1, vorgesehen. Die Verriegelungseinrichtung 23 für den Deckel 3 ist so eingerichtet, dass eine Verriegelungsbewegung 24 relativ zum Deckel 3 und/oder Speisenzubereitungsgefäß 2 entweder verriegelt, d.h., vom Entriegelt-Zustand in den Verriegelt-Zustand wechselt, oder entriegelt, d.h., vom Verriegelt-Zustand in den Entriegelt-Zustand wechselt. Die Verriegelungsbewegung 24 wird mithilfe eines nicht gezeigten Motors angetrieben. Insbesondere bilden die Verriegelungseinrichtung 23 für den Deckel 3 und die Verriegelungseinrichtung 25 für das Speisenzubereitungsgefäß 2 eine gemeinsame, gekoppelte Verriegelungseinrichtung 23, 25, so dass der Deckel 3 mit dem Speisenzubereitungsgefäß 2 und das Speisenzubereitungsgefäß 2 mit der Aufnahme 29 gemeinsam gleichzeitig oder zeitverzögert verriegelt und/oder entriegelt werden können. Der verriegelte oder entriegelte Zustand des Deckels 3 kann beispielsweise durch einen nicht dargestellten Deckelverriegelungssensor detektiert werden. Der verriegelte oder entriegelte Zustand des Speisenzubereitungsgefäß 2 an der Unterseite des Speisenzubereitungsgefäß 2 mit der Aufnahme 29 kann beispielsweise durch einen nicht dargestellten Gefäßverriegelungssensor detektiert werden. Ferner ist insbesondere ein nicht dargestellter Schließpositionssensor 7 vorgesehen, der detektieren kann, ob der Deckel 3 auf dem Speisenzubereitungsgefäß 2 in einer Schließposition aufliegt, durch die das Speisenzubereitungsgefäß 2 in einer vordefinierten Weise von oben durch den Deckel 3 abgedeckt wird.

Optional kann auf den Deckel 3 ein Zubehör 26 aufgesetzt werden, zum Beispiel in Form eines Behälteraufsatz zum Aufsetzen auf den Deckel 3 insbesondere mit Öffnungen an der Unterseite zum Einlassen von Wasserdampf aus dem Speisezubereitungsgefäß 2 in den Behälteraufsatz. In einer weiteren Ausgestaltung kann das auf den Deckel 3 aufgesetzte Zubehör 26 von oben mechanisch in mindestens eine Drehrichtung drehfest mit dem Werkzeug 9 gekoppelt werden.

In einer Ausgestaltung ist die Küchenmaschine 1 so konfiguriert, dass ein Aufsetzen eines Zubehörs 26 auf den Deckel 3 dazu führt, dass die Verriegelungseinrichtung 23 für ein Verriegeln aktiviert wird.

Über eine Benutzerschnittstelle, die insbesondere ein Touchscreen-Display 4, mindestens einen Knopf und/oder eine nicht dargestellte Spracherkennung umfassen, kann der Benutzer Informationen und Anweisungen von der Steuerung 10 erhalten und Eingaben für die Steuerung 10 tätigen. Eine solche Eingabe kann einen Soll-Wert für die mindestens eine Funktionseinheit umfassen. Eine Eingabe kann auch eine Rezeptauswahl sein. Vorzugsweise kann der Benutzer in einem manuellen Koch-Modus kochen oder in einem rezeptunterstützen Koch-Modus, den der Benutzer . Der Knopf kann ein Drehknopf 5 und/oder ein Bildzeichen 13 auf dem Touchscreen-Display 4 sein. Insbesondere umfasst die Spracherkennungseinheit ein Mikrofon. In einer Ausgestaltung ist die Spracherkennungseinheit in das Smartphone des Benutzers ausgelagert und/oder Teil der Steuerung 10. Insbesondere wird der Hinweis über eine Ausgabeeinheit 14 dem Benutzer ausgegeben, die vorzugsweise den Display 4 für einen Hinweis in Textform, einen nicht dargestellten Lautsprecher zur Ausgabe in akustischer Form und/oder ein nicht dargestelltes Leuchtmittel zur Ausgabe in Form eines Aufleuchtens umfasst.

Insbesondere hat die Steuerung 10 Zugriff auf digitale Rezepte mit mehrere Rezeptschritten, die mithilfe der oben erwähnten Benutzerschnittstelle durch den Benutzer und die Küchenmaschine 1 zum Zubereiten einer Speise 20 durchgeführt werden können. Ein Rezeptschritt beinhaltet Soll-Werte für die mindestens eine Funktionseinheit, um die Funktionseinheit(en) entsprechend zu steuern, um den geplanten Speisenzubereitungsvorgang oder Kochprozess umzusetzen.

Die Steuerung 10 sorgt auf Basis von einem oder mehreren Kochparametern in Form von Soll-Werten zur Steuerung des Heizelements 6 und des Motors 11 für das Werkzeug 9 dafür, dass eine Speise 20 in dem Speisenzubereitungsgefäß 2 in gewünschter Weise erhitzt, zerkleinert und/oder gemischt wird.

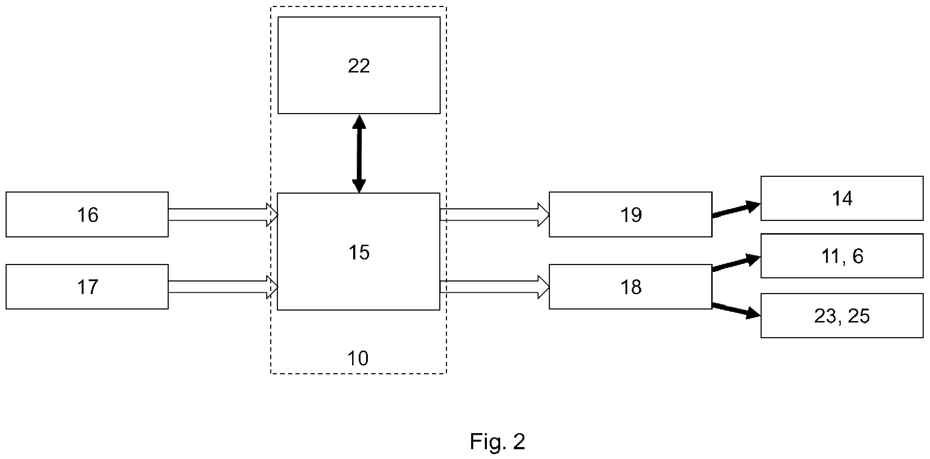

Figur 2 zeigt ein schematisches Ablaufdiagramm zur Reduzierung oder Erhöhung des Freiheitsgrades des Benutzers während der Benutzung der Küchenmaschine in Abhängigkeit von einer Vielzahl von Parameter. Eine erste Eingangsgröße 16 ist insbesondere eine angeforderte oder geplante Änderung, falls eine solche vorliegt. Eine zweite Eingangsgröße 17 enthält die Vielzahl der Parameter, die insbesondere Ist-Zustände umfassen. Die Prüfungseinheit 15 der Steuerung 10 prüft die Eingangsgrößen 16, 17 unter Zugriff auf den Speicher 22 mit den hinterlegten Daten, die insbesondere mindestens ein vordefiniertes Kriterium, einen Entscheidungsbaum und/oder eine Entscheidungsmatrix umfassen. In Abhängigkeit von dem Ergebnis der Prüfung ("erlaubt" oder "nicht erlaubt" bzw. "toleriert" oder "nicht toleriert") wird eine ebenfalls mithilfe der hinterlegten Daten des Speichers 22 ermittelte Maßnahme 18 und/oder ein mithilfe der hinterlegten Daten des Speichers 22 ermittelter Hinweis 19 durch die Steuerung umgesetzt. Ein Hinweis 19 wird hierzu über die Ausgabeeinheit 14 an den Benutzer ausgegeben. Eine Maßnahme 18 wird durch ansteuern der mindestens einen Funktionseinheit und/oder der mindestens einen Einrichtung umgesetzt. Die Einrichtung ist insbesondere eine Verriegelungseinrichtung, vorzugsweise die Verriegelungseinrichtung 23, 25 für den Deckel und/oder das Speisenzubereitungsgefäß. Die Funktionseinheit ist insbesondere das Heizelement 6 und/oder der Motor 11 für das Werkzeug 9.

Bei den Figuren 3a und 3b sind auf der X-Achse die Drehzahl des Werkzeugs 9 in Umdrehungen pro Minute (U/min), abgekürzt min⁻¹, aufgetragen. Werte > 0 bedeuten Rechtslauf, also Umdrehungen pro Minute in eine Drehrichtung nach rechts. Werte < 0 bedeuten Linkslauf, also Umdrehungen pro Minute in eine Drehrichtung nach links. Die Y-Achse beschreibt in den Figuren 3a und 3b den Anteil in [%] des Ist-Drehmoments zum maximal möglichen Drehmoment. Die Figuren 3a und 3b werden im Folgenden näher erläutert.

Figur 3a illustriert exemplarisch einen Auszug aus einem Entscheidungsbaum oder einer Entscheidungsmatrix für die Prüfung der Reduzierung oder Erhöhung des Freiheitsgrades des Benutzers insbesondere durch die Prüfungseinheit 15 während der Benutzung der Küchenmaschine 1, wenn sich der Deckel 3 in der Schließposition befindet und die Verriegelungseinrichtung 23 für den Deckel 3 in der Entriegelt-Stellung ist. "nOK" bedeutet in Fig. 3a "nicht erlaubt" bzw. "nicht toleriert" und "OK" entsprechend "erlaubt" bzw. "toleriert". Wenn eine angeforderte Änderung z.B. des Benutzers nach einer Erhöhung der Drehzahl von 0 U/min auf 400 U/min erfolgt, würde in die Prüfung ergeben, dass in dieser Situation diese Erhöhung nicht erlaubt wird. Die Steuerung wird die Drehzahl dann nicht ändern oder modifiziert auf 200 U/min ändern, weil 200 U/min die maximal erlaubte Drehzahl ist, die der angeforderten Drehzahl am nächsten kommt. Und wenn während des Speisenzubereitungsvorgangs sich bei einer Ist-Drehzahl von 100 U/min das Ist-Drehmoment zum maximalen Drehmoment plötzlich von 50% auf 80% des maximalen Drehmomentes erhöht, würde die Prüfung ergeben, dass diese Änderung toleriert werden kann und keine Maßnahmen zu erfolgen braucht.

Die Figur 3b illustriert exemplarisch einen Auszug aus einem Entscheidungsbaum oder einer Entscheidungsmatrix für die Prüfung der Reduzierung oder Erhöhung des Freiheitsgrades des Benutzers insbesondere durch die Prüfungseinheit 15 während der Benutzung der Küchenmaschine 1, wenn sich der Deckel 3 nicht in der Schließposition befindet und die Verriegelungseinrichtung 23 für den Deckel 3 in der Entriegelt-Stellung ist. "nOK" bedeutet in Fig. 3a "nicht erlaubt" bzw. "nicht toleriert" und "OK" entsprechend "erlaubt" bzw. "toleriert". Wenn z.B. der Benutzer bei einer Drehzahl von -100 U/min (also im Linkslauf) und einem Drehmoment-Verhältnis von 20% den Deckel 3 abnimmt, wird die Prüfung im Ergebnis diese Änderung als tolerierbar bewerten und die Steuerung keine Maßnahme ergreifen. Wenn der Benutzer jedoch nun eine Änderung anfordert (durch Drücken eines entsprechenden Knopfes der Küchenmaschine), um die Drehrichtung von Linkslauf (Drehen des Werkzeugs mit einer stumpfen Kante in Drehrichtung) auf Rechtslauf (Schneidrichtung) zu ändern, wird die Prüfung diese angeforderte Änderung als nicht erlaubbar bewerten und die Steuerung 10 wir die Drehrichtung nicht ändern. Stattdessen wird die Steuerung 10 dem Benutzer über die Ausgabeeinheit 14 einen Hinweis ausgeben, dass zum Wechsel der Drehrichtung der Deckel 3 in die Schließstellung gebracht werden muss.

In einer weiteren, in den Figuren nicht dargestellten Ausgestaltung ist Folgendes in den hinterlegten Daten hinterlegt, um einen Entscheidungsbaum oder eine Entscheidungsmatrix für die Prüfung der Reduzierung oder Erhöhung des Freiheitsgrades des Benutzers zu definieren. Die folgenden Drehzahlenangaben beziehen sich auf eine Außenkontur des Werkzeugs 9 oder den radial äußersten Punkt des Werkzeugs 9. Insbesondere sind die folgenden Drehzahlenangaben Beträge, also stets ≥ 0, so dass Drehzahlen > 0 sowohl Linkslauf als auch Rechtslauf erfassen können:

In einem Drehzahlenbereich mit einer Untergrenze von bevorzugt ungefähr 200 U/min muss der Deckel mit dem Speisenzubereitungsgefäß verriegelt sein, und zwar unabhängig von der Ist-Temperatur. Beispielsweise ist ein Entriegeln des Deckels in diesem Drehzahlenbereich also nicht erlaubt und wird auch nicht toleriert. Wenn der genannte Drehzahlenbereich nach unten verlassen wird, also bei Drehzahlen kleiner als ungefähr 200 U/min, kann hingegen ein Ergebnis einer Prüfung unter Berücksichtigung von weiteren Eingangsgrößen beinhalten, dass ein Entriegeln und Abnehmen des Deckels erlaubt und toleriert werden kann.

In einem Temperaturbereich mit einer Temperaturobergrenze der Ist-Temperatur bis ungefähr 95°C kann bei einer Drehzahl von größer als 0 U/min und kleiner als ungefähr 200 U/min ein Entriegeln und Abnehmen des Deckels von dem Speisenzubereitungsgefäß erlaubt werden, wenn unmittelbar nach dem Abnehmen des Deckels die Drehzahl auf 0 U/min reduziert wurde (durch eine entsprechende Maßnahme der Steuerung). Das Erhitzen mit dem Heizelement kann dann innerhalb dieses Temperaturbereichs auch bei geöffnetem Deckel frei fortgesetzt und die Soll-Temperatur innerhalb des genannten Temperaturbereichs frei geändert werden.

In einem Temperaturbereich mit einer Temperaturobergrenze der Ist-Temperatur bis ungefähr 95°C und einer Drehzahl von 0 U/min wird es von den hinterlegten Daten im Rahmen der Prüfung erlaubt und toleriert, den Deckel bei allen Ist- und Soll-Temperaturen in diesem Bereich im Entriegelt-Zustand zu lassen, den Deckel zu entriegeln, den Deckel abzunehmen und das Speisenzubereitungsgefäß während der Speisenzubereitung in dem genannten Parameterbereich von Drehzahl (= 0 U/min) und Temperatur (≤ 95°C) geöffnet (also nicht durch den Deckel abgedeckt) zu lassen.

In einem Temperaturbereich von größer als ungefähr 95°C und kleiner als ungefähr 130°C in Verbindung mit einem Drehzahlenbereich zwischen 0 U/min und ungefähr 200 U/min wird es von den hinterlegten Daten im Rahmen der Prüfung erlaubt und toleriert, den Deckel zu entriegeln und abzunehmen, wenn die Steuerung als Maßnahme ein Fortsetzen des Erhitzens durch das Heizelement auf eine festgelegte Zeitdauer begrenzt. Die festgelegte Zeitdauer kann beispielsweise mindestens 5 Sekunden oder/oder höchstens 15 Sekunden betragen.

In einem Temperaturbereich von größer als ungefähr 130°C (und bevorzugt kleiner als ungefähr 220°C) in Verbindung mit einem Drehzahlenbereich zwischen 0 U/min und ungefähr 200 U/min wird es von den hinterlegten Daten im Rahmen der Prüfung erlaubt und toleriert, den Deckel zu entriegeln und abzunehmen, wenn die Steuerung als Maßnahme ein Fortsetzen des Erhitzens durch das Heizelement auf eine festgelegte Zeitdauer begrenzt. Die festgelegte Zeitdauer kann beispielsweise mindestens 3 Sekunden oder/oder höchstens 10 Sekunden betragen.

Insbesondere ist vorgesehen, dass die Verriegelungseinrichtung 25 für das Speisenzubereitungsgefäß 2 immer dann automatisch in den Entriegelt-Zustand gebracht wird, wenn die Verriegelungseinrichtung 23 für den Deckel 3 vom Verriegelt-Zustand in den Entriegelt-Zustand wechselt. Insbesondere ist vorgesehen, dass die Verriegelungseinrichtung 23 für den Deckel 3 immer dann automatisch in den Entriegelt-Zustand gebracht wird, wenn die Verriegelungseinrichtung 25 für das Speisenzubereitungsgefäß 2 vom Verriegelt-Zustand in den Entriegelt-Zustand wechselt.

### Bezugszeichenliste

- 1: Küchenmaschine
- 2: Speisenzubereitungsgefäß
- 3: Deckel
- 4: Touchscreen-Display
- 5: Knopf
- 6: Heizelement
- 7: Schließpositionssensor
- 8: Gewichtssensor
- 9: Werkzeug
- 10: Steuerung
- 11: Motor
- 12: Deckelöffnung
- 13: Bildzeichen
- 14: Ausgabeeinheit
- 15: Prüfungseinheit
- 16: Erste Eingangsgröße
- 17: Zweite Eingangsgröße
- 18: Maßnahme
- 19: Hinweis
- 20: Speise
- 21: Prozessor
- 22: Speicher
- 23: Verriegelungseinrichtung für den Deckel
- 24: Verriegelungsbewegung
- 25: Verriegelungseinrichtung für das Speisenzubereitungsgefäß
- 26: Zubehör
- 27: Gehäuse
- 28: Temperatursensor
- 29: Aufnahme
- 30: Untergrund

## Patentansprüche

1. Küchenmaschine (1) zum Durchführen eines Speisenzubereitungsvorgangs durch Erhitzen, Zerkleinern und/oder Rühren einer Speise (20) in einem Speisenzubereitungsgefäß (2) mithilfe eines Heizelements (6) zum Erhitzen und/oder einem drehbaren Werkzeug (9) zum Zerkleinern und/oder Rühren der Speise (20) in dem Speisenzubereitungsgefäß (2),
wobei die Küchenmaschine (1) mindestens eine Funktionseinheit einschließlich einem Motor (11) zum Drehen des Werkzeugs (9) und/oder dem Heizelement (6) zum Erhitzen umfasst,
wobei die Küchenmaschine (1) mindestens eine Einrichtung zur Beschränkung eines Freiheitsgrades eines Benutzers während der Benutzung der Küchenmaschine für eine Speisenzubereitung einschließlich mindestens eine motorbetriebene Verriegelungseinrichtung (23, 25) für das Speisenzubereitungsgefäß (2) oder dessen Deckel (3) umfasst,
**dadurch gekennzeichnet, dass**
eine Steuerung (10) der Küchenmaschine (1) so konfiguriert ist, dass die Steuerung (10) auf Basis von einer Vielzahl von Parametern, die den Speisenzubereitungsvorgang beschreiben oder Einfluss darauf haben können, die mindestens eine Funktionseinheit und die mindestens eine Einrichtung zur Beschränkung des Freiheitsgrades so steuert, dass eine Reduzierung oder Erhöhung des Freiheitsgrades des Benutzers während der Benutzung der Küchenmaschine in Abhängigkeit von der Vielzahl der Parameter erfolgen kann.

2. Küchenmaschine (1) nach Anspruch 1, **dadurch gekennzeichnet, dass** die Verriegelungseinrichtung (23, 25) für das Speisenzubereitungsgefäß (2) und/oder dessen Deckel (3) eine Verriegelt-Stellung und eine Entriegelt-Stellung einnehmen kann, wobei die Steuerung (10) so eingerichtet ist, dass während des Speisenzubereitungsvorgangs sich die Verriegelungseinrichtung (23, 25) in der Entriegelt-Stellung befinden kann, obwohl eine Drehzahl des Werkzeugs (9) in einem Drehzahl-Bereich zwischen einer Mindestdrehzahl größer Null und einer Höchstdrehzahl liegt.

3. Küchenmaschine (1) nach einem der vorhergehenden Ansprüche, **dadurch gekennzeichnet, dass** die Küchenmaschine (1) so eingerichtet ist, dass der Speisenzubereitungsvorgang im rezeptunterstützen Koch-Modus auf Basis eines digitalen Rezeptes mit Rezeptschritten für eine zumindest teilautomatisierte Speisenzubereitung mit der Küchenmaschine (1) oder im manuellen Koch-Modus erfolgt.

4. Küchenmaschine (1) nach einem der vorhergehenden Ansprüche, **dadurch gekennzeichnet, dass** die Vielzahl der Parameter mindestens einen Ist-Zustand beinhalten, insbesondere einen Ist-Wert der mindestens einen Funktionseinheit, einen Ist-Zustand der Speise (20) und/oder einen weiteren Ist-Zustand der Küchenmaschine (1).

5. Küchenmaschine (1) nach einem der vorhergehenden Ansprüche, **dadurch gekennzeichnet, dass** die Vielzahl der Parameter mindestens einen aktuellen Soll-Wert, einen angeforderten Soll-Wert und/oder einen geplanten Soll-Zustand umfasst, insbesondere bezüglich der mindestens einen Funktionseinheit, bevorzugt einschließlich eine Soll-Drehzahl, ein Soll-Drehmoment, eine Soll-Drehrichtung, eine Soll-Temperatur, einen Soll-Druck, einen Soll-Zutaten-Zustand der Speise (20), und/oder einer Soll-Zubereitungsart.

6. Küchenmaschine (1) nach einem der vorhergehenden Ansprüche, **dadurch gekennzeichnet, dass** die Vielzahl der Parameter mindestens einen angeforderten Stellzustand einer der mindestens einen Einrichtung oder einen Stellzustand der mindestens einen Einrichtung umfasst, insbesondere bezüglich der Verriegelt-Stellung und Entriegelt-Stellung der mindestens einen Verriegelungseinrichtung (23, 25).

7. Küchenmaschine (1) nach einem der vorhergehenden Ansprüche, **dadurch gekennzeichnet, dass** die Vielzahl der Parameter mindestens einen Gerätezustand oder eine angeforderte Gerätezustandsänderung umfasst, insbesondere bezüglich einer aufgesetzten oder abgenommenen Deckelposition, bezüglich eines Speisenzubereitungsgefäß-Typs, eines Deckel-Typs, eines Werkzeug-Typs, eines Zubehör-Typs und/oder einem Vorhandensein des Werkzeugs (9) oder eines Zubehörs (26).

8. Küchenmaschine (1) nach einem der vorhergehenden Ansprüche, **dadurch gekennzeichnet, dass** die Steuerung (10) so eingerichtet ist, dass die Steuerung (10) eine angeforderte Änderung oder einen Ist-Zustand, der in der Vielzahl von Parametern enthalten ist, mithilfe von hinterlegten Daten prüft, ob die angeforderte Änderung erlaubt bzw. der Ist-Zustand toleriert werden kann oder nicht.

9. Küchenmaschine (1) nach dem vorhergehenden Anspruch, **dadurch gekennzeichnet, dass** die Steuerung (10) so eingerichtet ist, dass die Steuerung (10) die mindestens eine Funktionseinheit und/oder die mindestens eine Einrichtung zur Beschränkung des Freiheitsgrades gemäß den hinterlegten Daten automatisch modifiziert steuert und/oder einen Hinweis an den Benutzer ausgibt, wenn die Prüfung ergeben hat, dass der Ist-Zustand einen erlaubten Bereich verlässt oder verlassen hat.

10. Küchenmaschine (1) nach einem der zwei vorhergehenden Ansprüche, **dadurch gekennzeichnet, dass** die Steuerung (10) so eingerichtet ist, dass die Steuerung (10) die mindestens eine Funktionseinheit und/oder die mindestens eine Einrichtung zur Beschränkung des Freiheitsgrades entsprechend der angeforderten Änderung steuert, wenn die Prüfung ergeben hat, dass die angeforderte Änderung erlaubt werden kann.

11. Küchenmaschine (1) nach einem der drei vorhergehenden Ansprüche, **dadurch gekennzeichnet, dass** die Steuerung (10) so eingerichtet ist, dass die Steuerung (10) die mindestens eine Funktionseinheit und/oder die mindestens eine Einrichtung zur Beschränkung des Freiheitsgrades ohne die angeforderte Änderung steuert und/oder einen Hinweis an den Benutzer ausgibt, wenn die Prüfung ergeben hat, dass die angeforderte Änderung nicht erlaubt werden kann.

12. Küchenmaschine (1) nach einem der vier vorhergehenden Ansprüche, **dadurch gekennzeichnet, dass** die Steuerung (10) so eingerichtet ist, dass die Steuerung (10) die mindestens eine Funktionseinheit und/oder die mindestens eine Einrichtung zur Beschränkung des Freiheitsgrades mit einer modifizierten Änderung, die der angeforderte Änderung gemäß der hinterlegten Daten am nächsten kommt, steuert und/oder einen Hinweis an den Benutzer ausgibt, wenn die Prüfung ergeben hat, dass die angeforderte Änderung nicht erlaubt werden kann.

13. Küchenmaschine (1) nach einem der Ansprüche 3 bis 12, **dadurch gekennzeichnet, dass** die Steuerung (10) so eingerichtet ist, dass im rezeptunterstützen Koch-Modus zu Beginn des Speisenzubereitungsvorgangs alle Rezeptschritte des digitalen Rezepts oder zu Beginn eines Rezeptschrittes, insbesondere eines Rezeptschrittes mit manuellen Aktionen des Benutzers, auf angeforderte oder erforderliche Stellzustände der mindestens einen Einrichtung zur Beschränkung des Freiheitsgrades und/oder angeforderte oder erforderliche Gerätezustandsänderungen geprüft werden und solche Änderungen davon gesammelt werden, die den Freiheitsgrad des Benutzers beschränken und eine manuelle Aktion des Benutzers erfordern, insbesondere ein Auflegen des Deckels (3) auf das Speisenzubereitungsgefäß (2).

14. Verfahren zum Durchführen eines Speisenzubereitungsvorgangs durch Erhitzen, Zerkleinern und/oder Rühren einer Speise (20) in einem Speisenzubereitungsgefäß (2) mithilfe eines Heizelements (6) zum Erhitzen und/oder einem drehbaren Werkzeug (9) zum Zerkleinern und/oder Rühren der Speise (20) in dem Speisenzubereitungsgefäß (2), wobei die Küchenmaschine (1) mindestens eine Funktionseinheit einschließlich einem Motor (11) zum Drehen des Werkzeugs (9) und/oder dem Heizelement (6) zum Erhitzen umfasst, wobei die Küchenmaschine (1) mindestens eine Einrichtung zur Beschränkung eines Freiheitsgrades eines Benutzers während der Benutzung der Küchenmaschine (1) für eine Speisenzubereitung einschließlich mindestens eine motorbetriebene Verriegelungseinrichtung (23, 25) für das Speisenzubereitungsgefäß (2) oder dessen Deckel (3) umfasst,
**gekennzeichnet durch** die folgenden Schritte:
Steuern der mindestens einen Funktionseinheit und die mindestens eine Einrichtung zur Beschränkung des Freiheitsgrades auf Basis von einer Vielzahl von Parametern, die den Speisenzubereitungsvorgang beschreiben oder Einfluss darauf haben können, derart, dass eine Reduzierung oder Erhöhung des Freiheitsgrades des Benutzers während der Benutzung der Küchenmaschine (1) in Abhängigkeit von der Vielzahl der Parameter erfolgen kann.

15. Computerprogramm umfassend Befehle, die bei der Ausführung des Programms durch die Steuerung (10) diese veranlassen, das Verfahren nach dem vorhergehenden Anspruch auszuführen.
